# EUROPÄISCHE PATENTSCHRIFT

(11) **EP 1 417 097 B1**
(45) Veröffentlichungstag und Bekanntmachung des Hinweises auf die Patenterteilung: **22.06.2005**
(21) Anmeldenummer: 02762403.0
(22) Anmeldetag: 26.07.2002
(51) Int. Cl.: B32B 27/30

(54) **EVOH UND EVM IN EIN- ODER MEHRSCHICHTIGEN ERZEUGNISSEN**
EVOH AND EVM IN SINGLE-LAYERED OR MULTI-LAYERED PRODUCTS
EVOH ET EVM DANS DES PRODUITS A UNE OU PLUSIEURS COUCHES

(30) Priorität: 08.08.2001 DE 10137972; 08.04.2002 DE 10215293
(43) Veröffentlichungstag der Anmeldung: 12.05.2004
(73) Patentinhaber: Bayer Aktiengesellschaft, 51368 Leverkusen (DE)
(72) Erfinder: HOCH, Martin, 52525 Heinsberg (DE); ITTER, Ulrich, 42277 Wuppertal (DE); PARG, Roland, 51373 Leverkusen (DE); WRANA, Claus, 51061 Köln (DE); SCHULTE, Helmut, 47803 Krefeld (DE); SCHWARZ, Peter, 47800 Krefeld (DE); ULRICH, Ralph, 40882 Ratingen (DE)
(86) Internationale Anmeldenummer: PCT/EP2002/008381
(87) Internationale Veröffentlichungsnummer: WO 2003/013851

(56) Entgegenhaltungen:
- EP-A- 0 274 748
- EP-A- 0 326 827
- EP-A- 0 454 850
- EP-A- 0 603 519
- US-A- 4 389 450
- US-A- 4 883 696

## Beschreibung

Die vorliegende Erfindung betrifft ein ein- oder mehrschichtiges Erzeugnis enthaltend α-Olefin-Vinylalkohol-Copolymere und wenigstens ein α-Olefin-Vinyl-acetat-Copolymerisat, dadurch gekennzeichnet, dass das α-Olefin-Vinylacetat-Copolymerisat im Bereich von 35 bis 99,99 Gew.% an Vinylacetat-Wiederholungseinheiten enthält, welche eine gute Flexibilität aufweisen, die die Verarbeitung zu Filmen oder anderen dünnwandigen Artikeln erlaubt, die nach Reckung oder Tiefziehung transparent sind, ein Verfahren zu deren Herstellung und die Verwendung als Verpackungsfolien.

Insbesondere für Verpackungsfilme werden Schrumpfverpackungs-, "skin-pack"-System- und Reck-Prozesse verwendet. EVOH ist ein sehr sprödes Material und die entsprechenden Filme haben schlechte flexible Eigenschaften. Andererseits haben EVOH-Filme ausgezeichnete Gas-Barriere-Eigenschaften, wodurch EVOH das bevorzugte Material für Grenzschichten in mehrschichtigen Filmen ist. EVOH ist auch für Kraftstoffschläuche vorgeschlagen worden.

WO-99/28124-A1 zeigt, dass Spannungs-Dehnungs-Kurven in hohem Grade vom Aufbau des Filmes abhängen. Hohe Dehnungs-Werte können mit mehrschichtigen Aufbauten von bis zu 61 Schichten erzielt werden, die mit drei Schichten verglichen werden. Jedoch sind die technischen Anforderungen für die Herstellung solch eines Filmes hoch und folglich schwierig mit EVOH-haltigen Filmen zu realisieren.

Modifizierungen der EVOH-Harze mit Nylon-Typ-Polymeren werden zum Beispiel beschrieben in Ahn, Tae Oan, Kim, Chang Kee; Kim, Byung Kyu; Jeong, Han MO; Huh, Jung. Dep. Chem. Technol., Seoul National. Univ, Seoul, S. Korea. Polym. English. Sci. (1990), 30(6), 341-9. In Ahn, So-Bong; Jeong, Han Mo, Department of Chemistry, University of Ulsan, Ulsan, S. Korea, Polymer (Korea) (1999), 23(6), 837-843 wird die Mischbarkeit von PVPST (Vinylpyridin-Styrolcopolymere) mit EVOH beschrieben. Jedoch wurde der Effekt auf Flexibilität nicht studiert. Mischbare EVOH- / Poly-vinyl-Pyrrolidonmischungen werden offenbart in Ahn, So-Bong, Jeong, Han MO. Department of Chemistry, University of Ulsan, Ulsan, S. Korea, Korea Polym. J. (1998), 6(5), 389-395.

EP-A1-0 309 095 beschreibt Abmischungen von EVOH mit bestimmten amorphen Polyamiden, eine Erhöhung der Flexibilität dieser Blends verglichen mit dem reinen EVOH wird dort jedoch nicht berichtet.

EP-A2-0 820 381 beschreibt Mischungen aus EVOH und polaren Copolymeren wie Ethylen-Acrylat-Copolymer und Ethylen-Copolymer, die mit Maleinsäureanhydrid modifiziert wurden.

EP-A1-0 440 535 beschreibt Mischungen aus EVOH, einem PE der Dichte 0,900 bis 0,940 und dem Reaktionsprodukt aus einem Carbonsäure-gepfropften Polyolefin und einem oligomeren Polyamid.

EP-A1-1 022 309 beschreibt Mischungen aus EVOH, Ethylen-Acrylat-Copolymer und Ethylen-Acrylat-Säureanhydrid-Copolymer, welches mit Polyamiden umgesetzt wurde für den Anwendungszweck der Co-Injektion mit PET zur Fertigung von Vorformen von biorientierten Flaschen.

WO-98/45367-A1 beansprucht Mischungen aus EVOH und Ethylen-Vinylacetat-Copolymeren zur Herstellung von Artikeln mit erhöhter environmental stress crack resistance wobei die verwendeten Ethylen-Vinylacetat-Copolymeren VA-Gehalte bis ca. 30 % aufweisen. Besondere Anforderungen an die Sauerstoffdurchlässigkeit bzw. die Durchlässigkeit werden dort nicht gestellt.

US-A-5,993,977 beschreibt Mehrschichtverbunde, die neben einer wasserdichten PE-Schicht und einer Papierschicht auch eine gasdichte Schicht aufweisen, die aus einem Blend von EVOH und einem polaren Ethylenpolymer bestehen. Dieses polare Ethylenpolymer wird als modifiziertes PE angesehen. Die erfindungsgemäß beanspruchte Blendkomponente ist jedoch ein Vinylacetat Polymer, welches unpolar (mit Ethylen) modifiziert worden ist. Es ist in keiner Weise mit dem in US 5,993,977 beanspruchten Polymer zu vergleichen.

In EP-A 0 333 443 werden mehrschichtige Erzeugnisse offenbart, deren Schichtaufbau drei unterschiedliche Ethylen-Vinylacetat-Copolymerschichten (EVM-Schichten), eine Barriereschicht, eine Klebeschicht und eine Copolyamidschicht enthalten.

DE-A 26 44 209 offenbart eine Verbundfolie aus einer Polypropylen(PP)-Basisfolie, einer Zwischenschicht aus modifiziertem Polyethylen (PE) und schließlich einer Außenschicht aus Ethylen-Vinylalkohol-Copolymerisat (EVOH). Die bekannten Schwierigkeiten eine EVOH-Schicht zu recken, werden dort umgangen, indem die EVOH- und die Zwischenschicht nur in eine Richtung gereckt werden, während die PP-Folie biaxial gereckt ist. Dies erfordert die Herstellung einer PP-Gießfolie mit anschließender mono-axialer Reckung, deren Laminierung mit EVOH und einer Zwischenschicht und anschließend die monoaxiale Reckung dieses Verbundes. Dieses Verfahrens hat den Nachteil, aus mehreren Verfahrensschritten zu bestehen. Eine biaxiale Reckung ist durch dieses Verfahren nicht möglich.

US-A 4 400 428 offenbart zusammengesetzte Filme, die biaxiale Polyamidfilme sowie Ethylen-Vinylalkohol-Copolymerschichten und Siegelschichten enthalten.

Orientierte Mehrschichtfolien, die durch Coextrusion von Polyamidfilmen und Ethylen-Vinylalkohol-Copolymeren hergestellt und anschließend monoaxial gereckt werden, werden in EP-A 132 565 offenbart.

In JP-A 2001 277 419 werden für die Verpackungsindustrie verwendbare Filme, die biaxial orientierte Nylon 6 Filme und eine Zusammensetzung bestehend aus Polyurethanen, einer Zweischichtpolyurethankomponente und einem LLDPE-Film enthalten, beschrieben. Sie zeichnen sich durch eine gute Spannkraft und eine geringe Permeabilität aus.

Biaxial orientierte Nylon 6- Filme, die mit ungerecktem Polypropylen verklebt werden und eine geringe Sauerstoffdurchlässigkeit aufweisen, sind in JP-A 2001 277 417 offenbart.

Weitere, sehr komplizierte Systeme werden in JP-A 2001 294 279 offenbart, wo eine biaxial gereckte Nylonschicht mit einer Polyurethanankerschicht, mit Polyvinylalkohol und mit Schutzschichten versehen wird.

In JP-A 09039172 wird EVOH zunächst biaxial gereckt und dann einer Corona-Oberflächenbehandlung unterzogen, beidseitig mit PE laminiert und mit einer biaxial gereckten Polyamidschicht versehen.

JP-A 09 039 182 offenbart die Coextrusion von Polyamid (PA) mit PE für biaxial gereckte Folien und die Laminierung mit EVOH, welches noch etwas Polyamid enthält, wobei keine Ankerschichten nötig sind, die Barriereschicht aber noch Corona behandelt werden muss.

WO 9 703 822 offenbart Folien hoher Festigkeit und geringer Feuchtigkeitsdurchlässigkeit, die aus einer monoaxial gereckten Schicht aus Polyamid und EVOH und einer biaxial orientierten LLDPE-Schicht bestehen, wobei die beiden Schichten mittels einer Polyurethan-Zwischenschicht gebunden werden müssen.

Verbundfolien mit papierartigem Charakter ohne Aluminiumfolie werden in JP-A 08 207 927 offenbart, indem eine Thermoplastschicht mit einer biaxial orientierten Polyamid, PET oder Polypropylenschicht verbunden wird. Anschließend erfolgt eine SiO₂-Bedampfung. Der weitere Schichtaufbau enthält eine EVOH- oder PVOH-Schicht, die schließlich an mehrere Papierschichten gebunden wird.

In JP-A 01 255 535 wird ein biaxial orientierter Polyamidfilm mit einem coextrudiertem Film aus Ethylen-Vinylalkohol-Copolymerisat und einem Ionomer (Klebeschicht) laminiert, um einen Schrumpffilm zu erhalten.

JP-A 06255054 offenbart 3-Schichtfolien, deren erste Schicht Polyamid 6, die zweite ein Blend aus teilaromatischem Polyamid des Typs MXD-Nylon 6007 mit Ethylen-Vinylacetat-Copolymerisat und die dritte eine Mischung der Materialien der ersten beiden Schichten enthält. Dabei wird den Polyamidschichten noch eine kleine Menge an Maleinsäureanhydrid-gepfropften Ethylen-Propylen-Copolymer zugesetzt, um die Knickbruchbeständigkeit zu verbessern.

Biaxial orientierte Polyamidblends (Nylon 66 und NLXD6) werden auch in EP-A 0 540 293 offenbart, da sie eine bessere Konfektionierbarkeit durch Beschneiden aufweisen.

In JP-A 04 169 231 wird eine 3-Schicht-Folienkonstruktion offenbart mit einer Copolyamidschicht, einer Ethylen-Vinylalkohol-Copolymerisatschicht und einer weiteren Copolyamidschicht. Diese Folie kann biaxial gereckt werden, jedoch nur im Verhältnis 3:1. Bei Einsatz von Polyamid des Nylon 6 Typs wird die Folie nach der Reckung runzelig. Demnach lassen sich Kombinationen aus hochschmelzendem Polyamid und EVOH nicht biaxial recken, ohne dass Phasentrennungen eintreten.

JP-A 04 131 237 offenbart Folien aus Ethylen-Vinylallcohol-Copolymerisat und Polyamid 6/12-Blends einschließlich einer Menge LiCl, die mit biaxial orientiertem Polyamid 6 und ungerecktem Polypropylen laminiert werden, um Wasserdampf-undurchlässige Folien zu erhalten.

In JP-A 01 221 241 wird ein PET-Film zunächst biaxial gereckt und dann mit einer Verbundfolie aus EVA /EVOH/Nylon/EVA laminiert, wobei die Verbundfolien noch einer Corona-Behandlung unterzogen wird.

Unter EVA wird hier ein Ethylen-Vinylacetat-Copolymer verstanden, das einen Vinylacetatgehalte bis maximal 35 Gew.-% aufweist.

JP-A 62 083 144 offenbart eine Verpackungsfolie aus einem biaxial gereckten Ethylen-Vinylalkohol-Copolymerisatfilm, der nach einer thermischen Behandlung mit einem biaxial gerecktem Polypropylenfilm laminiert wird, wobei noch eine Polyurethanschicht als Klebeschicht erforderlich ist.

JP-A 09 220 761 offenbart gereckte PA/EVOH/PA Folien, wobei vor dem Reckschritt ein spezielles Temperprogramm eingehalten werden muss.

JP-A 1998 003 5669 offenbart Folienextrusionen aus PA und EVOH, wobei jedoch nur Doppelschichten erhalten werden, die dann erst nach Behandlung in Wasser gereckt werden können.

Nir et al. beschreiben in Polym. Networks Blends, 7 (4), 139-46 (1997) Blends aus Ethylen-Vinylalkohol-Copolymer und einem Ethylen-Vinylacetat-Copolymer mit einem Vinylacetatgehalt von 9 Gew.-%.

Der Stand der Technik zeigt, dass ein mehrschichtiges Erzeugnis das ein thermoplastisches Elastomer wie Polyamid oder Polypropylen und Ethylen-Vinylalkohol-Copolymerisat (EVOH) enthält, nur nach besonderer Vorbehandlung reckbar oder tiefziehbar ist. Zwar ist die biaxiale Reckung von Folien, die nur Polyamid enthalten ein gut bekanntes Verfahren, andererseits ist die Reckung von EVOH schwierig, weil es sehr spröde ist und wegen seiner raschen Kristallisation nur über ein sehr enges Verarbeitungsfenster reckbar ist. Die Fertigung von dünnen, gereckten Folienkonstruktionen kann daher bisher nur unzureichend oder nur in einem mehrstufigem Prozess, der aus vielen Verfahrensschritten aufgebaut ist, gewährleistet werden. Die zahlreichen Verfahrensschritte führen zu wirtschaftlichen Nachteilen.

Die Aufgabe der vorliegenden Erfindung war es Blendkomponenten für EVOH zu finden, die eine Reckung der Mischung, die eine Blendkomponente und EVOH enthält, ermöglicht, wobei die grundlegenden mechanischen Eigenschaften des EVOH und seine gute Barriereeigenschaft beibehalten werden sollen.

Unter einer guten Barriereeigenschaft versteht man in erster Linie, dass das Erzeugnis keine gute Sauerstoffdurchlässigkeit zeigt. Unter guter Barriereeigenschaft ist aber auch die Fähigkeit zu verstehen andere Moleküle wie Aromabestandteile und chemische Medien vom zu schützenden Gut so gut wie möglich fern zu halten.

Allgemein sollten gleichzeitig die Haftungseigenschaften der EVOH-Folien verbessert werden um dadurch Optionen zur Fertigung einfacherer Mehrschichtfolien zu erhalten. Daher ist eine weitere Aufgabe der vorliegenden Erfindung ein mehrschichtiges Erzeugnis bereit zustellen, welches ohne weitere Vorbehandlung nach der Reckung transparent ist und zusätzlich geringe Sauerstoffdurchlässigkeit aufweist.

Die Aufgabe wird gelöst durch ein ein- oder mehrschichtes Erzeugnis enthaltend ein oder mehrere α-Olefin-Vinylalkohol-Copolymere und wenigstens ein α-Olefin-Vinylacetat-Copolymerisat, dadurch gekennzeichnet, dass das α-Olefin-Vinylacetat-Copolymerisat im Bereich von 35 bis 99,99 Gew.% an Vinylacetat-Wiederholungseinheiten enthält.

In dem erfindungsgemäßen einschichtigen Erzeugnis werden Folien enthaltend α-Olefin-Vinylalkohol-Copolymere und wenigstens ein α-Olefin-Vinyl-acetat-Copolymerisat, das im Bereich von 35 bis 99,99 Gew.% Vinylacetat-Wiederholungseinheiten enthält, verwendet.

Die Folien des erfindungsgemäßen einschichten Erzeugnisses enthalten als α-Olefin Ethylen, Propen, n-Buten, i-Buten, Penten, Hexen, 1-Hexen, Hepten, Octen, 1-Octen und deren Gemischen.

Die Folien des erfindungsgemäßen einschichten Erzeugnisses enthalten bevorzugt α-Olefin-Vinylacetat-Copolymerisat mit mindestens 45 Gew.% an Vinylacetat-Wiederholungseinheiten.

Die Folien des erfindungsgemäßen einschichtigen Erzeugnisses enthalten besonders bevorzugt α-Olefin-Vinylacetat-Copolymerisat mit mindestens 65 Gew.% an Vinylacetat-Wiederholungseinheiten.

Vorteilhaft wird bei dem Verfahren zur Herstellung des einschichten Erzeugnisses das Copolymerisat in einem Mischorgan mit den übrigen Bestandteilen vermischt.

Vorteilhaft enthält das erfindungsgemäße mehrschichtige Erzeugnis mindestens eine Schicht A und mindestens eine Schicht B,
wobei
- A: ein thermoplastisches Polymer enthält und
- B: ein α-Olefin-Vinylalkohol-Copolymer und ein α-Olefin-Vinylacetat-Copolymer mit einem Vinylacetatgehalt im Bereich von 35 bis 95 Gew.-% enthält.

In dem erfindungsgemäßen mehrschichtigem Erzeugnis ist das thermoplastische Polymer bevorzugt Polyamid oder Polypropylen.

Es wird in dem mehrschichtigen Erzeugnis als α-Olefin-Vinylalk-ohol-Copolymer Ethylen-Vinylalkohol-Copolymerisat mit einem Ethylengehalt im Bereich von 20 bis 75 mol-% eingesetzt.

Bevorzugt wird in dem erfindungsgemäßen mehrschichtigem Erzeugnis als α-Olefin-Vinylacetat-Copolymer Ethylen-Vinylacetat-Copolymer eingesetzt.

Die bevorzugte Schichtabfolge in dem erfindungsgemäßen mehrschichtigen Erzeugnis ist A,B,A.

Bevorzugt lautet die Schichtabfolge des erfindungsgemäßen mehrschichtigen Erzeugnisses Polyamid B-Schicht Polyamid.

Bevorzugt lautet die Schichtabfolge des erfindungsgemäßen mehrschichtigen Erzeugnisses Polypropylen B-Schicht Polypropylen.

Vorteilhaft besitzt das erfindungsgemäße mehrschichtige Erzeugnis eine Schichtabfolge von Polypropylen B-Schicht Polypropylen, wobei zwischen den Schichten jeweils noch eine weitere Schicht eines Polymers eingefügt ist, die der Verbesserung des Zusammenhaltes des Verbundes dient.

Vorteilhaft wird das erfindungsgemäße mehrschichtige Erzeugnis durch Coextrusion oder durch Laminierung hergestellt.

Bevorzugt wird das erfindungsgemäße ein- oder mehrschichtige Erzeugnis als Verpackungsmaterial verwendet.

Das mehrschichtige Erzeugnis lässt sich gut zu dünnen Folien ausrecken und weist nach der Reckung eine hohe Sauerstoffbarriere, sowie Reißfestigkeit, Durchstichfestigkeit und Chemikalienbeständigkeit auf. Das mehrschichtige Erzeugnis zeigt dabei eine Chemikalienbeständigkeit sowohl gegenüber tierischen und pflanzlichen Fetten und Ölen, als auch gegenüber Treibstoffen und Schmiermitteln. Weiterhin werden gute mechanische Eigenschaften wie hohe Zugfestigkeiten, Dehnungen, Elastizitätsmoduli und Biegefestigkeiten beobachtet.

Vorteilhaft bei dem mehrschichtigen Erzeugnis ist ebenfalls, dass es weitere Verarbeitungsmöglichkeiten wie Vakuumformung, Blasfolienverarbeitung und Tiefziehung ermöglicht, so dass auch dreidimensionale Formkörper aus dem erfindungsgemäßen Erzeugnis geformt werden kann. Die erfindungsgemäße Barriereschicht lässt sich zusammen mit anderen Schichten einfacher extrudieren, da eine gleichmäßigere Verteilung über Flachdüsen erzielt wird. Das erfindungsgemäße Erzeugnis weist eine verminderte Sprödigkeit der Barriereschicht auf wodurch eine bessere Knickbruchbeständigkeit erzielt wird.

Unter den α-Olefin-Vinylalkohol-Copolymeren des erfindungsgemäßen ein- oder mehrschichtigen Erzeugnisses werden Copolymere aus α-Olefinen und Vinylalkohol verstanden. Diese werden bevorzugt durch Verseifung von α-Olefin-Vinylacetat-Copolymeren hergestellt. Die Auswahl des α-Olefin-Vinylalkohol-Copolymeren erfolgt bevorzugt nach Anforderungen an die Barriereeigenschaft des herzustellenden Artikels. Die α-Olefin-Vinylalkohol-Copolymere weisen bevorzugt α-Olefingehalte von 20 bis 75 mol-%, besonders bevorzugt von 25 bis 60 mol-% und ganz besonders bevorzugt von 25 bis 50 mol-% auf.

Es wird meist ein hoher Verseifungsgrad angestrebt, dieser liegt bevorzugt zwischen 90 und 99,9 %.

Geeignete α-Olefine sind sämtliche dem Fachmann bekannten α-Olefine, wie Ethen, Propen, n-Buten, i-Buten, Penten, Hexen, 1-Hexen, Hepten, Octen, 1-Octen und deren höhere Homologen. Diese können auch Substituenten tragen, insbesondere C₁-C₅-Kohlenwasserstoffe. Als α-Olefine werden besonders bevorzugt Ethen und Propen.

Im Falle von Ethylen-Vinylalkohol-Copolymeren können neben Ethylen- und Vinylalkoholeinheiten noch andere α-Olefine oder abgeleitete Monomere enthalten sein, allerdings in Mengen unter 10 mol%.

Das Molgewicht des α-Olefine-Vinylalkohol-Copolymers wird bevorzugt indirekt über MFI-Messungen bestimmt und ist wichtig für das Verarbeitungsverhalten. Die Fließfähigkeit des Produktes, ausgedrückt als MFI (ASTM D1238, 190°C, 2,16 kg Last), liegt bevorzugt zwischen 0,5 und 100 g/10 min, besonders bevorzugt zwischen 1 und 50 g/10 mm.

Die Auswahl der erfindungsgemäßen α-Olefin-Vinylacetat-Copolymeren richtet sich nach den Anforderungen an die Sauerstoffdurchlässigkeit. Diese wird geringer, wenn ein Ethylen-Vinylacetat-Copolymer mit höherem VA-Gehalt verwendet wird. Eine besonders hohe Flexibilität und damit Reckbarkeit oder Tiefziehbarkeit wird erzielt, wenn der VA-Gehalt nicht zu hoch wird. Beispielsweise kann ein reines Vinylacetat-Homopolymer sich für manche Anwendungen als zu spröde erweisen.

Eine besonders hohe Aromadichtigkeit kann mit erfindungsgemäßen Ethylen-Vinyl-acetat-Copolymere als Blendkomponente erzielt werden, wenn vorzugsweise Hoch-VA-haltige Typen eingesetzt werden. Diese weisen eine geringe Quellbarkeit und damit auch eine geringe Durchlässigkeit für unpolare bzw. wenig polare Verbindungen auf.

Vorteilhafterweise werden solche α-Olefin-Vinylacetat-Copolymere verwendet, die nur eine geringe oder keine Restkristallinität von Poly-α-Olefinsequenzen aufweisen.

Die α-Olefin-Vinylacetat-Copolymerisate des erfindungsgemäßen ein- oder mehrschichtigen Erzeugnisses enthalten bevorzugt 35 bis 98 % an Vinylacetat-Wiederholungseinheiten.

Geeignete α-Olefine sind sämtliche dem Fachmann bekannten α-Olefine, wie Ethylen, Propen, n-Buten, i-Buten, Penten, Hexen, 1-Hexen, Hepten, Octen, 1-Octen und deren höhere Homologen. Selbstverständlich können diese auch Substituenten tragen, insbesondere C₁-C₅-Kohlenwasserstoffe. Besonders bevorzugt werden Ethylen und Propen.

Bevorzugte Ethylen-Vinylacetat-Copolymere sind beispielsweise unter dem Handelsnamen LEVAPREN® oder Levamelt® der Bayer AG kommerziell erhältlich.

Bevorzugte α-Olefin-Vinylacetat-Copolymerisate sind Levapren® 500 HV, Levapren® 600 HV, Levapren® 700 HV und Levapren® 800 HV. Diese Polymerisate enthalten jeweils 50 ± 1,5 Gew.% Vinylacetat, bzw. 60 ± 1,5 Gew.% Vinylacetat, bzw. 70 ± 1,5 Gew.% Vinylacetat, bzw. 80 ± 2,0 Gew.% Vinylacetat.

Die erfindungsgemäß einsetzbaren Ethylen-Vinylacetat-Copolymere besitzen MFI-Werte von 0,5 bis 150, bevorzugt 1 bis 100, besonders bevorzugt 1 bis 50, gemessen nach DIN 53 735 bei 130°C und einer Last von 2,16 kg. Die Auswahl des MFI-Wertes richtet sich nach den Anforderungen der Verarbeitung.

Bevorzugte α-Olefin-Vinylacetat-Copolymerisate haben ein durchschnittliches Molekulargewicht (Zahlenmittel) (bestimmt mittels GPC) im Bereich von 50 kg/mol bis 500 kg/mol und Mooney-Viskositäten gemäss DIN 53 523 ML 1+4 bei 100°C im Bereich von 3 bis 50, insbesondere 4 bis 35 Mooneyeinheiten.

Die α-Olefin-Vinylacetat-Copolymerisate können auch in Form einer Mischung aus zwei oder mehr unterschiedlichen der genannten α-Olefin-Vinylacetat-Copolymerisaten eingesetzt werden.

Die für die erfindungsgemäßen α-Olefin-Vinylalkohol-Copolymerisat-α-Olefin-Vinylacetat-Copolymerisat-Blends einzusetzenden α-Olefin-Vinylacetat-Copolymerisate werden bevorzugt nach dem Lösungsverfahren hergestellt wie es in EP 341 499, EP 510 478 und DE 3 825 450 beschrieben ist. Es handelt sich um ein Lösungsverfahren bei Drücken von 100 bis 700 bar und Temperaturen zwischen 50 und 150°C, wobei radikalische Initiatoren verwendet werden. Dieses Verfahren hat den Vorteil, gelfreie Produkte zu liefern, die auch keine weiteren Hilfsstoffe wie Emulgatoren enthalten.

Die α-Olefine-Vinylalkohol-Copolymerisat-α-Olefin-Vinylacetat-Copolymerisat-Blends des erfindungsgemäßen ein- oder mehrschichtigen Erzeugnisses enthalten bevorzugt 50 bis 95 Gew.-% α-Olefine-Vinylalkohol-Copolymere und 5 bis 50 Gew.-% α-Olefine-Vinylacetat-Copolymere.

Die α-Olefin-Vinylacetat-Copolymerisate in Schicht B des erfindungsgemäßen Erzeugnisses enthalten bevorzugt 35 bis 98 % an Vinylacetat-Wiederholungseinheiten.

Die Herstellung der α-Olefin-Vinylacetat-Copolymerisate erfolgt mit den in der Technik üblichen Copolymerisationsverfahren, beispielsweise durch Hochdruckcopolymerisation mit Hilfe radikalisch zerfallender Initiatoren, durch Copolymerisation mit Ziegler, bzw. mit Ziegler-Natta-Katalysatoren oder mit Phillips-Katalysatoren, oder aber durch Copolymerisation mit metallocenhaltigen Katalysatoren. Die Copolymerisation kann dabei in der Gasphase, in Lösung oder in einer Suspension sowohl kontinuierlich als auch diskontinuierlich durchgeführt werden.

Derartige Herstellungsverfahren sind dem in der Kautschuktechnik arbeitenden Fachmann bekannt und beispielsweise in V.E. Rohde, 141. Meeting at the ACS, Louisville 1992, aber auch in EP-A-0 341 499, DE-A-3 825 450 und EP-A-0 510 478 beschrieben. Die Lösungspolymerisation ohne Zusatz weiterer Hilfsstoffe ist das bevorzugte Verfahren für die erfindungsgemäß einzusetzenden Ethylen-Vinylacetat-Copolymerisate.

Die α-Olefin-Vinylacetat-Copolymensate/α-Olefin-Vinylalkohol-Copolymerisate werden bevorzugt in reiner Form eingesetzt. Jedoch können auch Abmischungen mit anderen Polymeren, wie Polyamiden eingesetzt werden. Anzusprechen sind Polyamidharze des Typs Nylon 6, Nylon 66, Nylon 46, Nylon 11, Nylon 12, Nylon 610, Nylon 612, Nylon 6/66 Copolymer, Nylon 6/66/610 Copolymer, Nylon MXD6, Nylon 6T, Nylon 6/6T Copolymer, Nylon 66/PP Copolymer und Nylon 66/PPS. Zu denken ist auch an Zusätzen von geeigneten Polyestern z.B. des Phthalat-Typs.

Diese Zusätze können bis zu 30 % des erfindungsgemäßen Blends ausmachen.

Entsprechend dem Stand der Technik können den α-Olefin-Vinylacetat-Copolymerisaten/α-Olefin-Vinylalkohol-Copolymerisaten auch Elastomere zugesetzt werden, die über möglichst geringe Gasdurchlässigkeit verfügen sollten. Dies können beispielsweise Butyl-Kautschuk, Butylkautschuk mit p-Alkylstyrol und deren halogenierte Derivate sein. Der Gehalt sollte 30 % in der Mischung nicht übersteigen. Es kann dann erforderlich sein, weitere Kompatibilisatoren einzusetzen, wie es z.B. in EP-A1-0 722 850 beschrieben wird.

Additive können ebenfalls verwendet werden, um ein- oder mehrschichtige Erzeugnisse für spezielle Endanwendungen zur Verfügung zu stellen. Solche Additive können Pigmente, Farbstoffe, Weichmacher, Füllstoffe, Stabilisierungsmittel, Mittel zur Absorption von UV-Strahlung, Antioxidantien, Prozessöle u.ä. einschließen. Die verwendete Additivmenge kann je nach der beabsichtigten Endanwendung im Bereich von 0,1 bis 50 Gew.% schwanken. Vorzugsweise sollte keines der verwendeten Additive Strahlung nahe der Wellenlänge der Maximalabsorption eines in der Folie weiterhin eventuell enthaltenen Photovemetzungsmittels signifikant absorbieren.

Das erfindungsgemäße ein- oder mehrschichtige Erzeugnis kann ferner noch übliche Füllstoffe wie beispielsweise Talkum, Schwerspat oder Kaolin oder Ruß enthalten.

Selbstverständlich ist es möglich, die Eigenschaften des erfindungsgemäßen ein- oder mehrschichtigen Erzeugnisses durch Zusatz von lamellenförmigen Partikeln wie Muskovite oder Hydrotalcit zu modifizieren wie erwähnt in EP-A1-0 309 095. Diese schichtförmigen Füllstoffe erniedrigen die Sauerstoffdurchlässigkeit. Die eingesetzten α-Olefin-Vinylacetat-Copolymere erlauben eine erleichterte Einmischung solcher mineralischen Pigmente. Diese können den α-Olefin-Vinylacetat-Copolymerisaten/α-Olefin-Vinylalkohol-Copolymerisaten auch in größerer Menge in einem vorgeschalteten Mischschritt zugefügt werden.

Im Falle der Verwendung von EVOH-basierten Sperrschichten in Schrumpffolien werden oft Bestrahlungen vor der Schrumpfung durchgeführt. Mit den erfindungsgemäßen Blends lässt sich eine derartige Bestrahlungvernetzung, wie in DE-A1-198 34 580 beschrieben, besonders gut durchführen.

Die Barriereeigenschaften der erfindungsgemäßen Folien lassen sich durch Aufbringen eines siloxanbasierten Überzuges, wie in EP-A1-0 476 202 beschrieben, noch verbessern.

Häufig ist es vorteilhaft, wenn die Folie auch ein Photovemetzungsmittel enthält, das durch aktinische Strahlung aktiviert wird, typischerweise nach der Beschichtung des Polymeren. Geeignete Photovernetzungsmittel umfassen, sind aber nicht beschränkt auf (a) Aldehyde wie Benzaldehyd, mit Chromophor substituiertes Acetaldehyd und ihre substituierten Derivate, (b) Ketone wie Acetophenon, Benzophenon und ihre substituierten Derivate, z.B. Sandoray™ 1000 (Sandoz Chemicals, Inc., Charlotte, NC), (c) Chinone wie die Benzochinone, Anthrachinon und ihre substituierten Derivate, (d) Thioxanthone wie 2-Isopropylthioxanthon und 2-Dodecylthioxanthon und (e) bestimmte mit einem Chromophor substituierte Halogenmethyl-sym-triazine wie 2,4-Bis(trichlormethyl)-6-4'-methoxyphenyl-s-triazin und 2,4-Bis(trichlormethyl)-6-3',4'-dimethoxyphenyl-s-triazin. Weil viele solche Triazine bei der Aktivierung HCl erzeugen, kann weiterhin der Zusatz einer basischen Verbindung zur polymeren Zusammensetzung von Nutzen sein. Das photoaktive Vernetzungsmittel liegt in der Regel in einem Bereich von 0,005 bis 2 Gew.%, bevorzugt von 0,01 bis 0,5 Gew.% und noch bevorzugter von 0,05 bis 0,15 Gew.% des Copolymerisats vor.

Jedoch kann eine eventuell erforderliche Vernetzung auch mittels energiereicher Strahlung, wie α-, β- oder γ-Strahlung in Abwesenheit eines Vernetzers erfolgen.

Weiterer Gegenstand der Erfindung ist ein Verfahren zur Herstellung des erfindungsgemäßen ein- oder mehrschichtigen Erzeugnisses, dadurch gekennzeichnet, dass in einem ersten Schritt das α-Olefin-Vinylaeetat-Copolymerisat mit dem α-Olefin-Vinylalkohol-Copolymerisat in einem Mischorgan mit den übrigen Bestandteilen vermischt wird.

Geeignete Mischungen aus den α-Olefin-Vinylacetat-Copolymerisaten und α-Olefin-Vinylalkohol-Copolymerisaten lassen sich mit jeder geeigneten Mischmethode herstellen, solange makroskopisch homogene Mischungen erhalten werden. Beispiele geeigneter Mischapparate sind Banbury Mischer, Walzen und bevorzugt Extruder. Besonders vorteilhaft sind dabei on-line Mischgänge z.B. in der Mischzone eines Folienextruders ohne spezielle weitere Vorkehrungen. Durch entsprechende Vorversuche muss gegebenenfalls die Eignung des geplanten Mischschrittes überprüft werden. Zur Sicherstellung eines konstanten Mischungsverhältnisses ist ein Dry Blendung der Materialien als Granulat vorteilhaft.

Das erfindungsgemäße ein- oder mehrschichtige Erzeugnis ist geeignet zur Aufbringung auf ein geeignetes Substrat zur Herstellung von Verpackungsfolien, insbesondere Barrierefilmen. Beispielsweise kann, wie in EP-A1-0 545 312 beschrieben, eine 5-Schichtfolie extrudiert werden, deren innerste Schicht aus dem erfindungsgemäßen einschichten Erzeugnis besteht, das auf beiden Seiten von je einer weiteren Zwischenschicht und einer Außenschicht umgeben ist.

Diese Schichten können z.B. aus nicht erfindungsgemäßen Ethylen-Vinylacetat-Copolymeren mit VA-Gehalten von 5 bis 30 % bestehen.

Geeignete Substrate schließen Polyolefinfilme (z.B. Polyethylen- und Propylenfilme), vor allem Corona-behandelte Polyolefinfilme und α-Olefin-Vinylalkoholfilme, insbesondere Ethylenvinylalkoholfilme (EVOH) ein.

Die erfindungsgemäße Copolymerisatmischung als Sperrschicht hat eine höhere Haftung auf solche Zwischen- bzw. Außenschichten, so dass es möglich ist durch Weglassen einer Schicht die Folienkonstruktion zu vereinfachen.

Eine komplizierte Mehrschichtfolie kann, wie in EP-A1-0 792 740 beschrieben am Beispiel einer Verpackungsfolie für Käse, aus 9 Schichten bestehen. Das erfindungsgemäße einschichtige Erzeugnis lässt die Möglichkeit zu, ausreichende Haftungen an Trägerfolien und weitere Verarbeitungsfunktionalitäten wie Siegelfähigkeit mit deutlich weniger Schichten zu erreichen.

In Mehrschichtfolien können die erfindungsgemäßen Erzeugnisse auch als Schichten neben der Sperrschicht verwendet werden. Durch die hohe Klebrigkeit können besonders gut Verbunde mit unpolaren Trägerfolien wie PP oder allgemein Polyolefinen hergestellt werden.

Es ist auch möglich die erfindungsgemäßen einschichtigen Erzeugnisse als Klebeschicht zu verwenden. Diese kann als Zwischenschicht zwischen EVOH und beispielsweise einer Polyolefinträgerschicht eingesetzt werden. Dabei wird hohe Klebrigkeit der erfindungsgemäßen Folie ausgenutzt. Für diesen Anwendungsaspekt kann das Mischungsverhältnis in Richtung Ethylen-Vinylacetat-Copolymeren (EVM) verändert werden, beispielsweise 20/80 bis 80/20 EVM/EVOH. Diese Klebeschicht trägt dann ebenfalls viel stärker zu einer Barrierewirkung bei als typische EVA-Klebeschichten mit VA-Gehalten bis 30 %.

Der Anwendungsbereich der erfindungsgemäßen ein- oder mehrschichtigen Erzeugnisse erstreckt sich auch allgemein auf Schichten mit Barierrewirkung. Dazu zählen auch Schläuche, bzw. Leitungen für organische Medien wie Treibstoffe. Beispielsweise könnten Treibstoffrohre wie in EP-A1-0 878 509 erwähnt mit einer Schicht des ein- oder mehrschichtigen Erzeugnisses gefertigt werden. Vorteilhafterweise kann eine nachträglich Vernetzung durch Strahlen erfolgen, um höhere Rückstellkräfte und Dehnbarkeit zu erzielen.

Weiterhin kann das erfindungsgemäße ein- oder mehrschichtige Erzeugnis für die Herstellung von Tank-Linem verwendet werden Hierzu wird das bevorzugt einschichtige Erzeugnis vor einem eventuellen Vernetzer auf die, vorzugsweise grundierte, Oberfläche einer geeigneten Unterlage (d.h. eines Substrats) aufgetragen.

Das bevorzugt einschichtige Erzeugnis kann mit vielen verschiedenen Verfahren auf ein Substrat (z.B. eine Bandunterlage) aufgebracht werden, darunter Lösungsbeschichtung, Lösungssprühen, Emulsionsbeschichtung, Tiefdruckbeschichtung oder andere Fachleuten bekannte Verfahren.

Eine weitere bevorzugte Methode zur Herstellung des ein- oder mehrschichtigen Erzeugnisses ist die Coextrusionsbeschichtung, üblicherweise in einer Beschichtungsanlage mit einem Schmelzefilm des α-Olefin-Vinylacetat-Copolymerisats/α-Olefin-Vinylalkohol-Copolymerisats, der in einem Extruder aufgeschmolzen und über eine Breitschlitzdüse auf ein Substrat, welches aus einem oder mehreren Polymerschichten bestehen kann, ausgetragen wird. Der dabei entstehende Verbund wird anschließend in einer Kühl-Anpresswalzen-Einheit abgekühlt und geglättet. Danach erfolgt die Aufwicklung der Verbundbahn in einer entsprechenden Wickelstation.

Beim weiterhin bevorzugten Kaschierverfahren werden analog dem Beschichtungsverfahren ebenfalls die Arbeitsgänge Auftragen der Beschichtungsmasse auf die Trägerbahn, Glätten und Kühlen, Abziehen und Aufwickeln durchgeführt. Bei der eigentlichen Extrusionskaschierung lässt man eine vorgefertigte Trägerbahn in einen Glättwerkwalzenstuhl, der 4 Walzen aufweist, einlaufen. Dabei wird die Trägerbahn vor dem ersten Walzenspalt mit einem Schmelzefilm, der in einem Extruder aufgeschmolzen und über eine Breitschlitzdüse ausgetragen wird, beschichtet. Vor dem zweiten Walzenspalt lässt man eine zweite vorgefertigte Bahn zulaufen. Der dabei entstehende Gesamtverbund wird beim Durchlauf durch den zweiten Walzenspalt geglättet, anschließend gekühlt, abgezogen und in einer Wickelstation aufgewickelt.

Nach dem weiterhin bevorzugten Blas-/Breitschlitz-Extrusionsverfahren werden allgemein zunächst das α-Olefin-Vinylacetat-Copolymerisat/α-Olefin-Vinylalkahol-Copolymerisat und verschiedene Polymere in unterschiedlichen Extrudern unter geeigneten Bedingungen aufgeschmolzen und anschließend in Form der Schmelzeströme unter Ausformen eines Mehrschichten-Schmelzestroms im Extrusionswerkzeug zusammengeführt. Danach erfolgt das Austragen, Abziehen und Abkühlen der die Folie enthaltenden Mehrschichtenschmelzebahn und das Aufwickeln des Verbundes. Auf diese Weise erhält man eine Verbundfolie. Das Breitschlitz-Extrusionsverfahren wird dabei bevorzugt angewandt.

Geeignete Polymere für diese Verfahren umfassen insbesondere α-Olefin-Vinylalkohol-Copolymerisat-α-Olefin-Vinylacetat-Copolymerisat-Blends mit thermoplastischen Polymeren. Das erfindungsgemäße mehrschichtige Erzeugnis enthält dabei mindestens eine Schicht A und eine Schicht B, wobei A ein thermoplastisches Polymer enthält. Thermoplastische Polymere sind beliebige Polymere bevorzugt solche, die sich biaxial recken lassen.

Besonders bevorzugte thermoplastische Polymere sind Polyamide, Polypropylen, Polystyrol, Polycarbonate, Polyester, Polyethylenterephthalat und Polybutylenterephthalat.

Ganz besonders bevorzugt eingesetzt werden Polyamide oder Polypropylen. Bevorzugt wird eine Schicht A mit mehr als 50 Gew.-% Polyamid oder mehr als 50 Gew.-% Polypropylen. Besonders bevorzugt wird eine Schicht A mit 60 bis 100 Gew.-% Polyamid oder 60 bis 100 Gew.-% Polypropylen. Die Schicht A enthält bevorzugt Polypropylen mit einer Schmelztemperatur im Bereich von 130°C bis 165°C. Besonders bevorzugt ist isotaktisches Polypropylen mit einem kristallinen Anteil von mehr als 50 %.

Die Schicht A enthält bevorzugt Polyamide mit einem Schmelzpunkt im Bereich von 170 bis 230°C.

Unter Polyamide sind Polymere, die durch die Säureamid-Gruppe -NH CO- miteinander verknüpft sind, (siehe auch Kunststoff-Handbuch Band VI, Polyamide, Carl Hanser Verlag München 1966) zu verstehen. Man unterscheidet zwei Gruppen von Polyamiden:
1) Aufbau aus einem Monomer durch Polykondensation von α-Aminocarbonsäuren oder Polymerisation ihrer Lactame zum Polyamid 6-Typ
2) Aufbau aus zwei Monomeren (Diaminen und Dicarbonsäuren) durch Polykondensation zum Polyamid 66-Typ (Gnauck, Fründt: Einstieg in die Kunststoffchemie. Carl Hanser Verlag München 1991).

Bevorzugte Polyamide sind übliche Polyamide, insbesondere Polyamid-6 aber auch Copolyamide sowie Mischungen aus Polyamid 6 und Copolyamiden, die durch Polykondensation bzw. Polymerisation polyamidbildender Ausgangsstoffen herstellbar sind.

Bevorzugte polyamidbildende Ausgangsstoffe sind neben Caprolactam weitere Lactame, wie Laurinlactam, ω-Aminocarbonsäuren, 11-Aminoundekansäure sowie Mischungen aus äquivalenten Mengen einer oder mehrerer Dicarbonsäuren, insbesondere Adipinsäure, Sebazinsäure, Azelainsäure, Dodecandisäure, Isophthalsäure oder Terephthalsäure und einem oder mehreren Diaminen wie Hexamethylendiamin, 1,4-Diaminobutan, 3-Aminomethyl-3,5,5-trimethylcyclohexylamin (Isophorondiamin), 4,4'-Diaminodicyclohexylmethan, 4,4'-Diaminodicyclohexylpropan-(2,2), m-Xylylendiamin, 1,6-Diamino-2,2,4-trimethylhexan, 2,2,4-Trimethylhexamethylendiamin oder 2,4,4-Trimethylhexamethylendiamin.

Die Herstellung derartiger Polyolefine kann durch die dem Fachmann geläufigen Polymerisationsarten erfolgen, beispielsweise durch Ziegler-Natta-Polymerisation, durch Polymerisation mit Hilfe von Phillips-Katalysatoren, durch Hochdruckpolymerisation oder durch Polymerisation mit Hilfe von metallocenhaltigen Katalysatoren.

Die Beschichtungs-/Extrusions-Verfahren werden in der Regel bei Temperaturen im Bereich von 170 bis 300°C, Drücken von 250 bis 400 bar und mittleren Durchlaufzeiten von 5 bis 20 min. durchgerührt. Da die α-Olefin-Vinylacetat-Copolymerisate/α-Olefin-Vinylalkohol-Copolymerisate in der Schmelze und in dem erfindungsgemäßen ein- oder mehrschichtigen Erzeugnis eine hohe Klebneigung zu allen Kontaktflächen aufweisen, kann es vorteilhaft sein, die für die Herstellung der Verbunde eingesetzten Walzen sowie die Abzugswalzen mit einem gegenüber den Copolymerisaten anti-adhäsiven Material, z.B. mit Polytetrafluorethylen zu beschichten. Hierdurch lassen sich u.a. für das einwandfreie Wickeln der Verbunde entsprechende Bahnspannungen einhalten.

Die auf diese Weise erhältlichen Folien lassen sich vorteilhaft als Verpackungsfolien mit Barriere-Eigenschaften gegenüber Luft, Sauerstoff, Aromastoffen usw. verwenden.

Zur Herstellung der transparenten Folien werden die Folien gereckt. Neben der bevorzugten biaxialen simultanen Reckung kann auch sequenziell gereckt werden.

Für das Verfahren der Reckung, insbesondere der biaxialen Reckung des erfindungsgemäßen Erzeugnisses kann wie in den Patentschriften DE 3 529 586, DE 3 042 884 und DE 2 845 793 verfahren werden.

Gereckte erfindungsgemäße Erzeugnisse können auch einem nachgeschalteten Wärmebehandlungsschritt unterzogen werden, um den Schrumpf (besonders den Heißwasserschrumpf) zu minimieren. Dieser Schritt kann auch unter einer Inertatmosphäre durchgeführt werden, wie es in DE-A 3 042 884 beschrieben wird, um eine Vergilbung zu vermeiden.

Die Kontrolle des Schrumpfes kann im Falle eines biaxial gereckten Erzeugnisses mittels eines speziellen Kühlprogrammes, wie beschrieben in DE-A 2 845 793, erreicht werden.

Für das Verpackungsmaterial aus den erfindungsgemäßen Erzeugnis kann auch eine Reckung aus dem Schlauch heraus erfolgen ("double-bubble").

Es ist vorteilhaft, auf das erfindungsgemäße mehrschichtige Erzeugnis auch eine weitere Schicht C aufzubringen, die eine Siegelbarkeit ermöglichen. Diese Schicht C enthält bevorzugt ein Copolymer aus Ethylen und einem weitem Monomer ausgewählt aus der Gruppe bestehend aus α-Olefinen, Vinylacetat und Acrylsäure. Bevorzugt werden Ethylen-α-Olefine-Copolymere die eine Dichte unter 0,92 g/cm³ haben. Als Ethylen-Vinylacetat-Copolymere werden solche bevorzugt, die einen Vinylacetatgehalt von nicht mehr als 20 Gew.-% besitzen. Bevorzugte Ethylen-Acrylsäure-Copolymere haben einen Acrylsäuregehalt von nicht mehr als 10 Gew.-%. Die Siegelschichten können nachträglich, bevorzugt durch Laminierung aufgebracht werden, aber auch von vornherein durch Coextrusion eingefügt werden und dann den Reckprozess durchlaufen.

### Beispiele

### 1. Materialien:

EVOH Ethylen-vinyl-alkohol-copolymer mit 44 mol% Ethylen der Fa. Kuraray
Levapren® 400, Ethylen-vinyl-acetat-copolymer mit 40 % Gew.% Vinyl-acetat, Mooneywert ML 1+4, 100°C ca. 23, MFI 1,5 der Fa. Bayer AG
Levapren® 600 HV, Ethylen-vinyl-acetat-copolymer mit 60 % Gew.% Vinyl-acetat, Mooneywert ML 1+4, 100°C ca. 27, MFI 3 der Fa. Bayer AG
Levapren® 800 HV, Ethylen-vinyl-acetat-copolymer mit 80 % Gew.% Vinyl-acetat, Mooneywert ML 1+4, 100°C ca. 25, MFI 4 der Fa. Bayer AG
Levapren® 700 HV, Version KA 8865, Ethylen-vinyl-acetat-copolymer mit 70 % Gew.% Vinyl-acetate, MFI 3,5 der Fa. Bayer AG
EVM 95, Ethylen-vinyl-acetat-copolymer mit 95 % Gew.% Vinyl-acetat, MFI ca. 8, hergestellt gemäss Beispiel 1.
AZDN V64 Azoinitiator, 2,2-Azo-bis-isobutyronitril, der Fa. Elf-Atochem

Der MFI wurde gemessen nach DIN 53735 unter den Bedingungen 190°C und 2,16 kp.

### Herstellung von EVM 95

Ethylen und Vinylacetat wird in einem Batch-Reaktor in Lösung mit radikalischer Initiierung polymerisiert.

Dazu wurde ein 5-1 Reaktor mit Lösung von 1114 g Vinylacetat (VA) in 890 g t-Butanol, und einer Lösung von 1 g ADZN V64 Azoinitiator in 50 ml t-Butanol befüllt, durch mehrfaches Aufpressen von Stickstoff und anschließender Druckentlastung inertisiert. Dann wurde Ethylen bis auf einen Druck von 6 bar aufgepresst. Die Mischung wurde dann auf eine Reaktionstemperatur von 58°C gebracht und der Druck auf 8 bar gehalten, wobei Ethylen entsprechend dem Verbrauch nachdosiert wurde.

5 Stunden nach Beginn der Polymerisation wurde eine Feststoffmenge von 24,6 % durch Probenahme bestimmt, der Reaktor auf Raumtemperatur gebracht, überschüssige Ethylen durch Entspannung ausgelassen und die Mischung abgelassen. Das Polymer wurde durch Trocknen im Vakuumtrockenschrank bis zur Gewichtskonstanz gewonnen. Das Produkt hatte ein Glastemperatur von 34,3°C bestimmt per DSC. Der VA-Gehalt betrug 95 % (bestimmt durch ¹H-NMR).

### Beispiele 1 bis 13 (Extrusionsbeispiele)

Extruder (Brabender Plasti-Corder und Meßextruder) mit einem L/D-Verhältnis von 30/25 D mit Breitschlitzdüse. Die verwendeten Materialien wurden in Granulatform dosiert und ein Temperaturprofil von 165°C, 170°C, 175°C und 180°C eingestellt und Drücke von 45 bis 60 bar eingestellt. Die Dicke der Folien wurde über den Durchsatz und über den die Abzugsgeschwindigkeit eingestellt. Die Folie wurde auf einer Kühlwalze (Wasserkühlung) abgekühlt und über mehrere Umlenkwalzen gewickelt oder als einzelne Streifen abgenommen.

Polymerblends wurden als Granulatmischungen hergestellt und direkt dem Extruder zugeführt. Es ließen sich bereits durch die Mischwirkung in dem als Förderorgan ausgelegten Extruder ausreichend homogene Blends erzielen.

Die dabei erhaltenen Folien wurden mechanisch und auf Sauerstoffdurchlässigkeit geprüft.

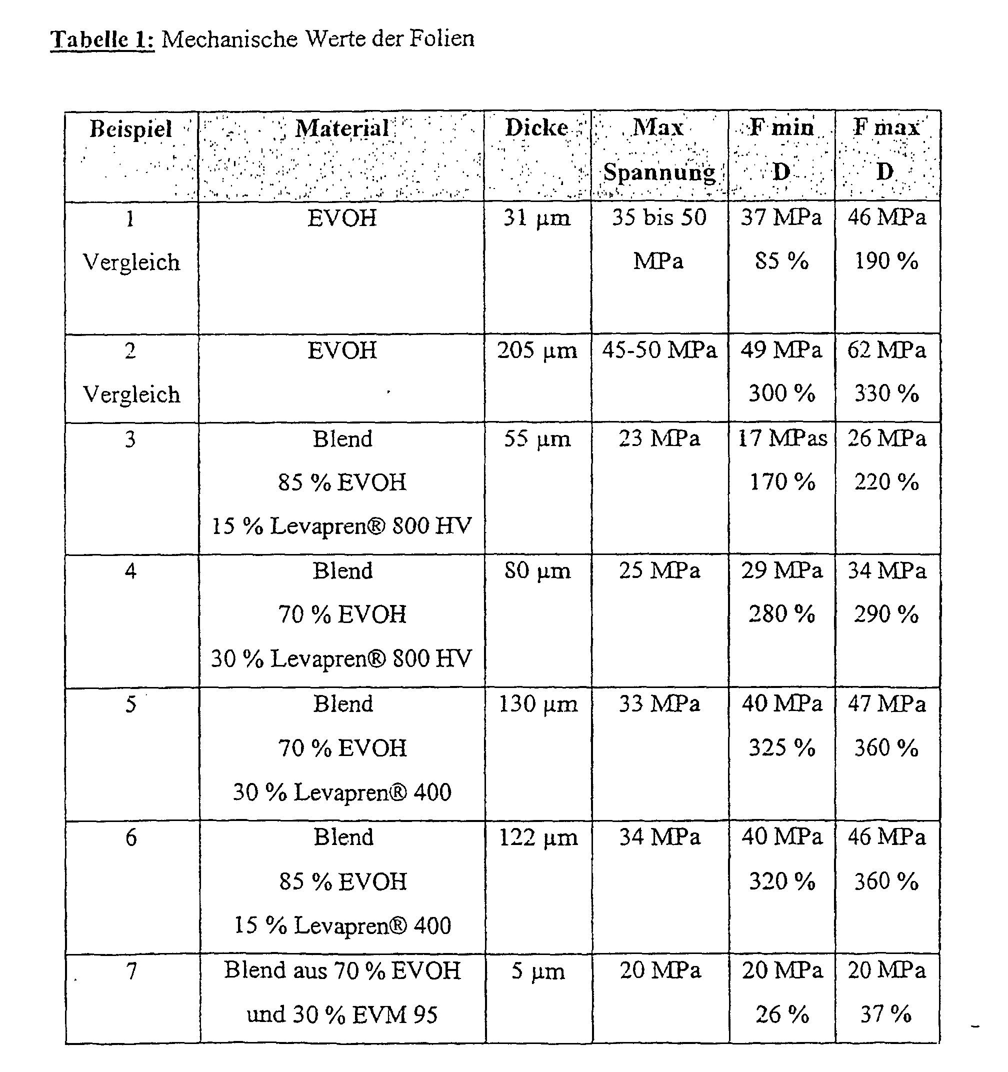

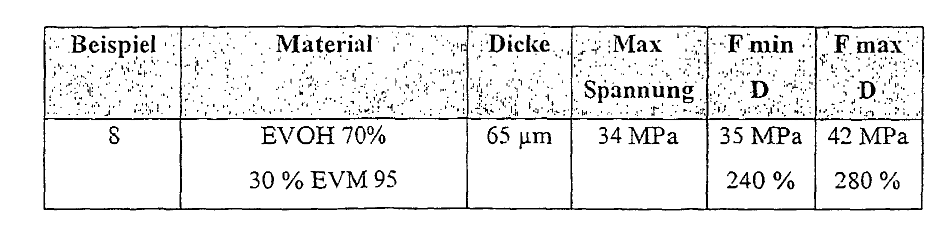

Die Zugversuche zeigen, dass Filme aus reinem EVOH schwer zu reproduzierbaren Festigkeiten bzw. Dehnungen auszuziehen sein. So können die Bruchfestigkeiten von Proben des selben Filmes sehr stark schwanken, gleiches gilt auch für die Dehnungen. Die Herstellung von einfach gereckten oder biaxialgereckten Filmen ist dadurch sehr erschwert.

Die in den Beispielen durchgeführten Blends mit Ethylen-Vinylacetat-Copolymer ergaben dagegen Filme, die eine höhere Reproduzierbarkeit bei den Zug-Dehnungswerten aufwiesen.

Der Film aus Beispiel 4 (Blend 70 % EVOH und 30 % Levapren®400) hatte einen deutlich klebrigen Griff. Die Oberfläche des Filmes wurde mittels IR untersucht und durch Vergleich mit den Einzelkomponenten ermittelt, dass sich fast ausschließlich Levapren®400 auf der Oberfläche befand. Daraus ist zu schließen, dass zumindest für EVA mit 40 % VA als Blendkomponente in EVOH eine teilweise Unverträglichkeit zumindest unter Extrusionsbedingungen vorliegt und damit diese Mischung nicht zu bevorzugen ist.

### Bestimmung der Sauerstoffdurchlässigkeit

Die Messungen wurden mit einem Messgerät der Fa. Mocon, Typ Oxtran nach DIN 53380 Teil III durchgeführt.

Tabelle 2 zeigt zunächst die Sauerstoffdurchlässigkeiten verschiedener EthylenVinylacetat-Copolymerer bei verschiedenen relativen Feuchten, variiert werden die Vinylacetatgehalte. Die Sauerstoffdurchlässigkeiten sinken mit steigenden Vinylacetatgehalt, gleichwohl wird das Werteniveau von EVOH nicht erreicht.

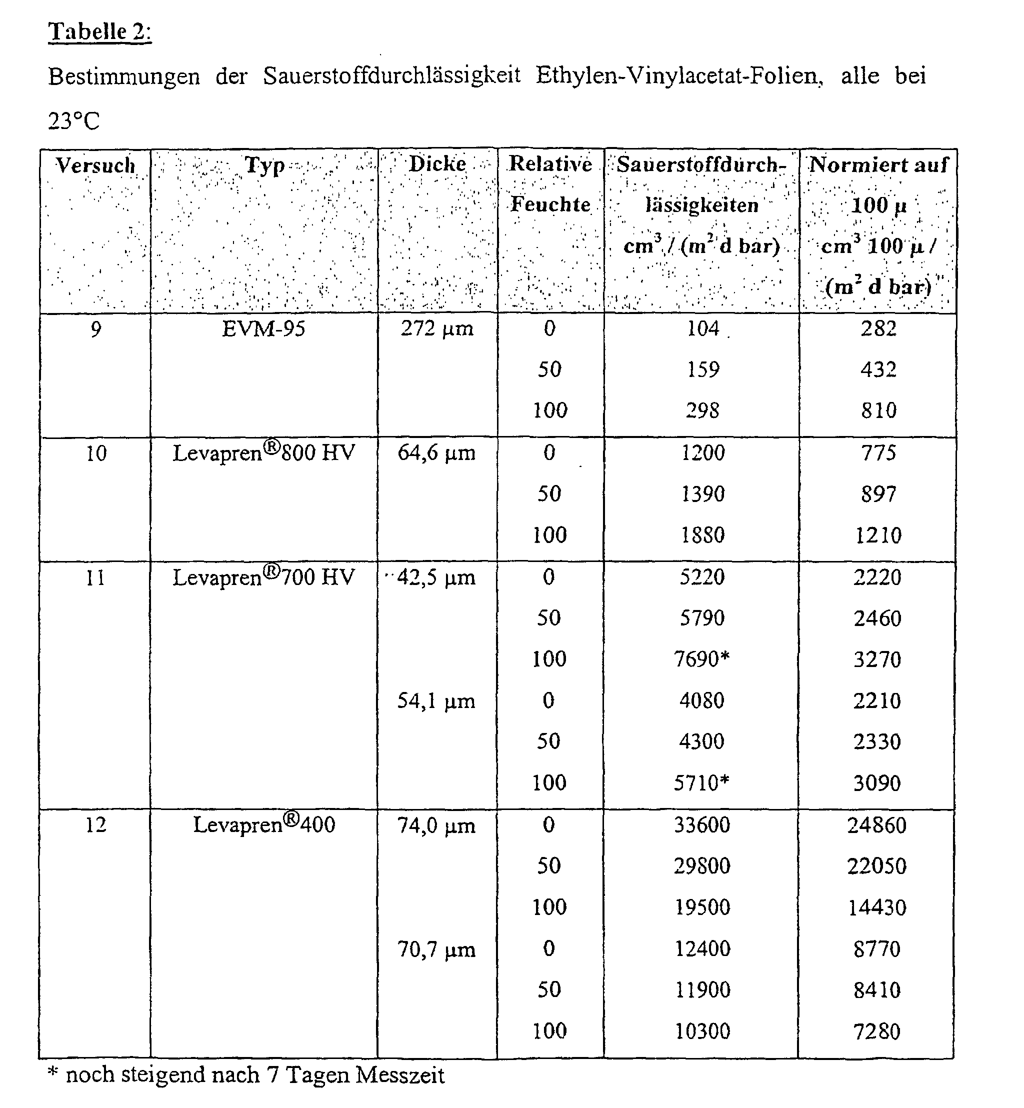

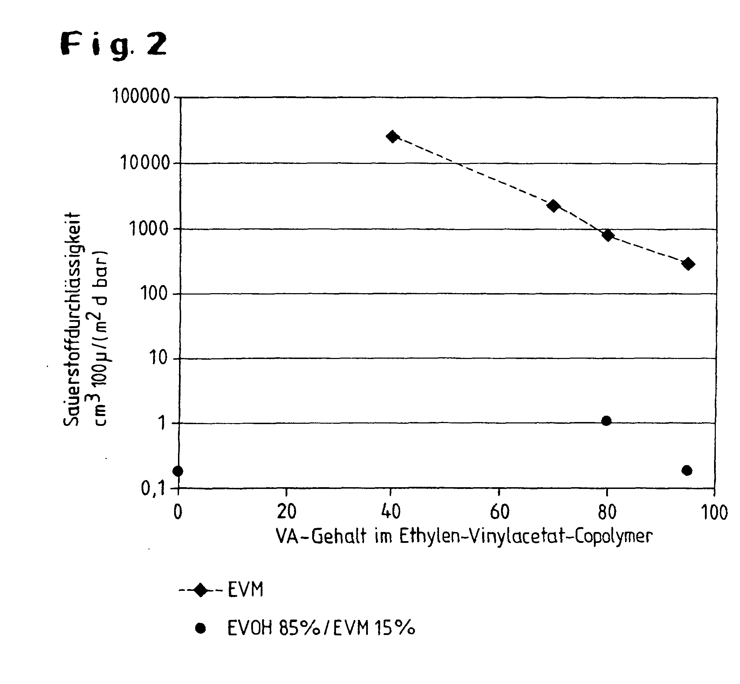

Die auf 100 µm normierten Werte sind graphisch in Fig. 2 aufgetragen.

Fig. 2: Werte aus Tabelle 2 auf 100 µm normierte Sauerstoffdurchlässigkeiten bei 0 % relativer Feuchte

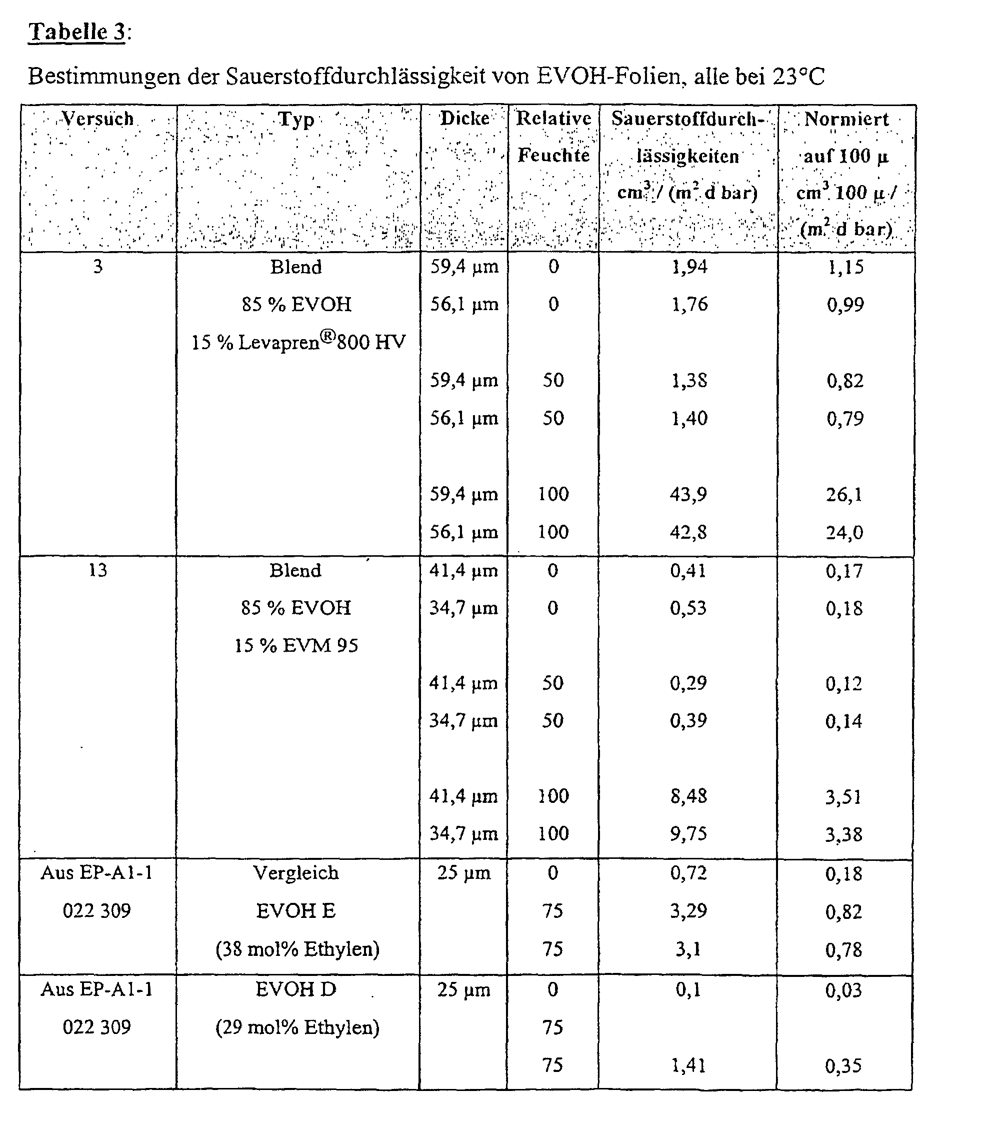

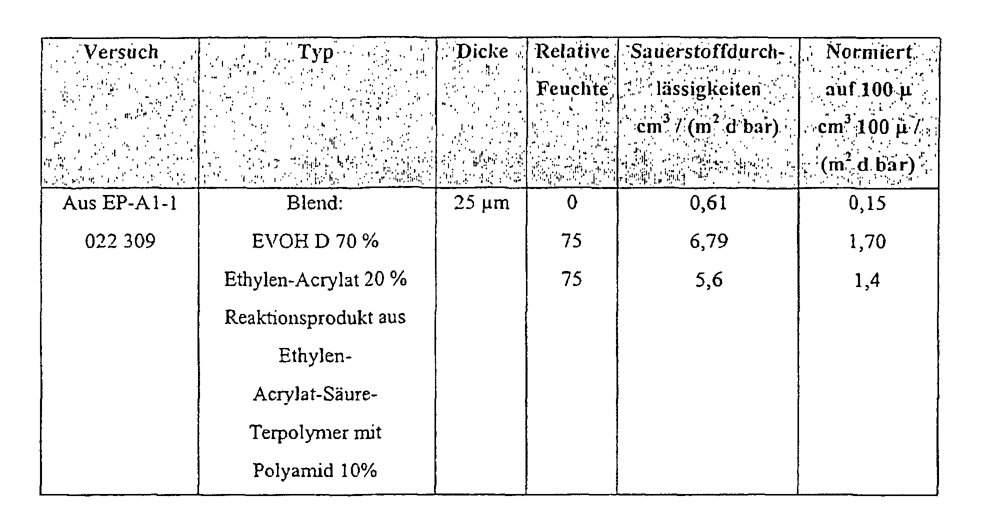

Es zeigt sich, dass die Sauerstoffdurchlässigkeiten der Folien aus EVOH und Ethylen-Vinylacetat-Copolymer nahe denen des reinen EVOH waren.

Dies ist besonders überraschend mit Blick auf die vergleichsweise schlechten Barriereeigenschaften der reinen Ethylen-Vinylacetat-Copolymere.

Gegenüber einem in EP-A1-1 022 309 beschriebenen komplizierten Folie von EVOH mit einem 1. Ethylen-Methylacrylat-Copolymer und 2. einem Reaktionsprodukt aus einem Terpolymer von Ethylen, Methylacrylat und Polyamid werden bessere Werte erzielt, wobei berücksichtigt werden muss, dass hier ein EVOH mit höherem Ethylengehalt eingesetzt wurde, welches naturgemäß etwas schlechtere Werte liefert als EVOH mit geringerem Ethylengehalt.

Die erfindungsgemäßen Folien erlauben eine deutlich einfachere Erzielung einer Ziehbarkeit (stretchablity) als z.B. in EP-A1-0 483 695 angegeben, wo Vielfachfolien von EVOH mit modifizierten Polyolefinen und Reaktionsprodukte mit Polyamid verwendet werden müssen.

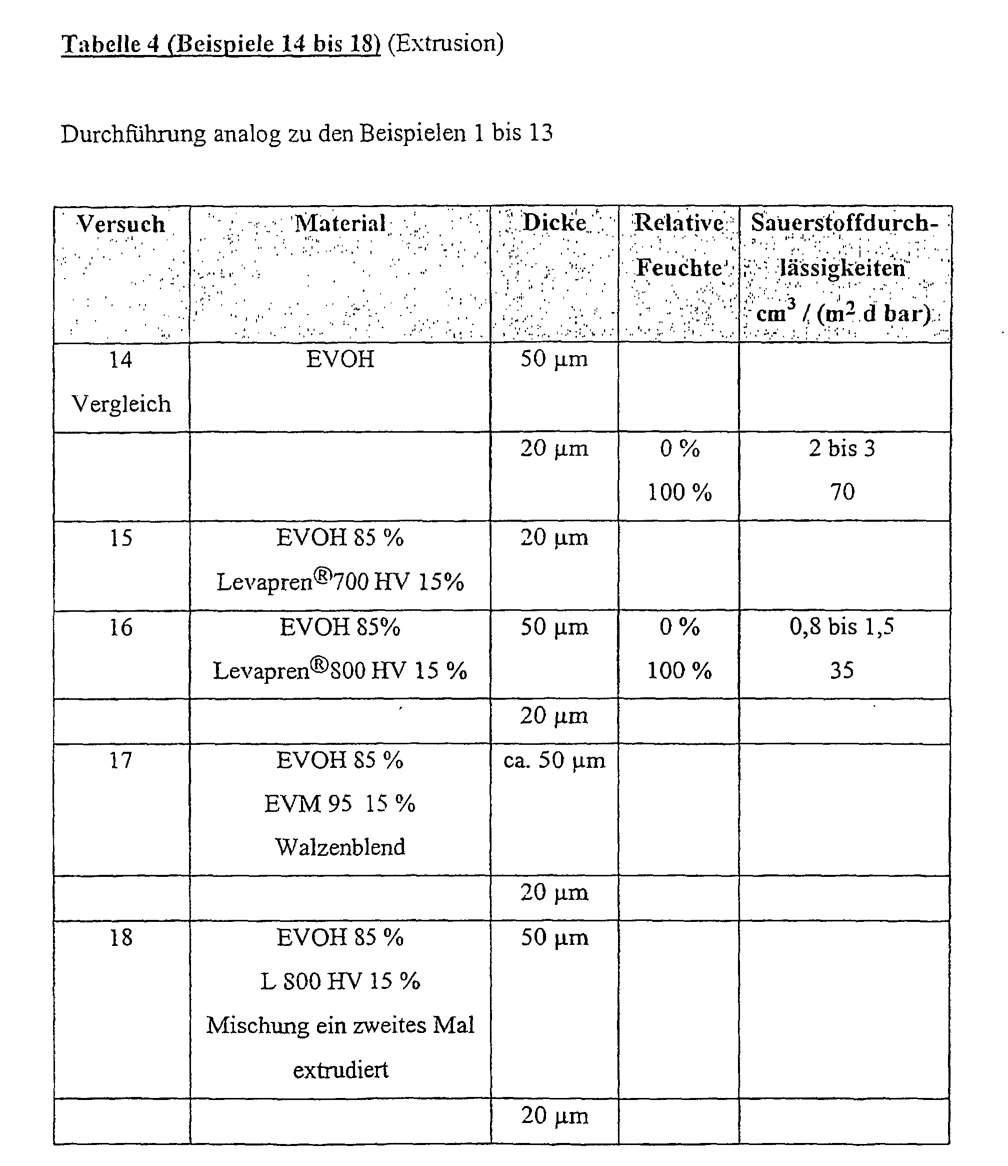

Beispiel 16 ist eine Wiederholung von Beispiel 3 und bestätigt, die gefundenen Sauerstoffdurchlässigkeiten.

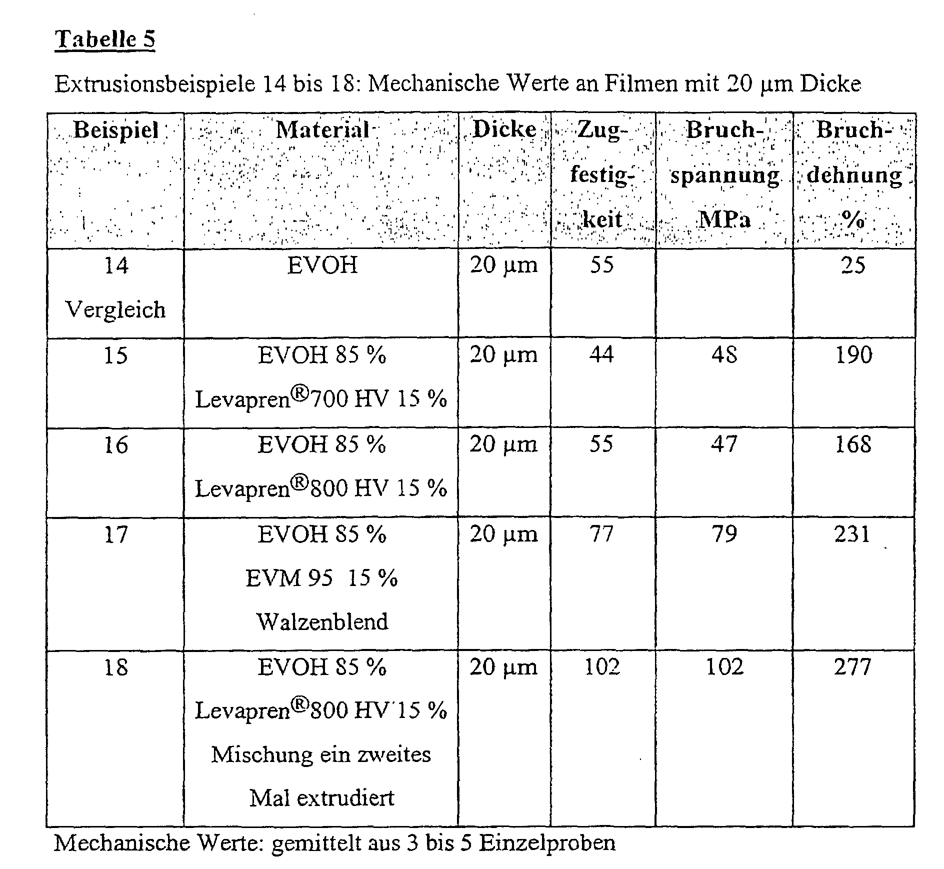

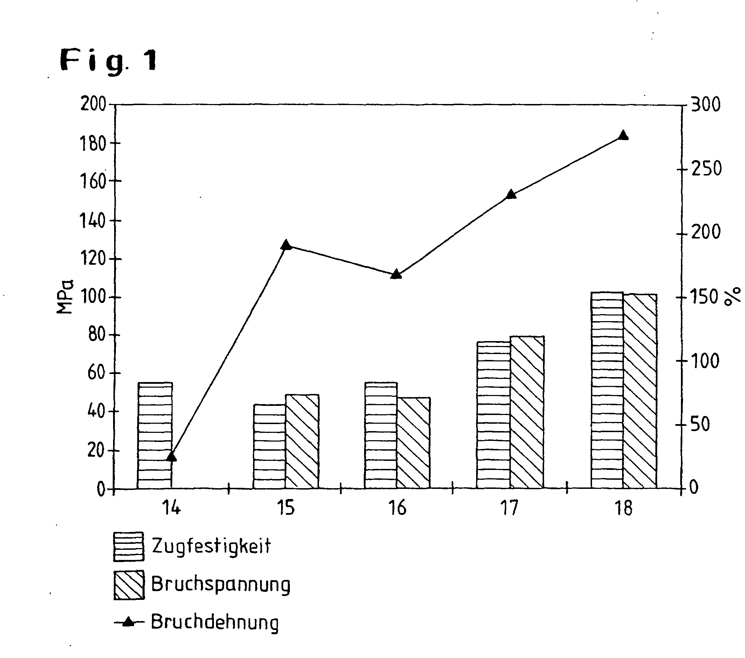

Die Ergebnisse sind in Fig. 1 dargestellt. Hier finden sich die mechanischen Werte der 20 µm-dicken Folien der Beispiele 14-18:
14: EVOH rein
15: 75 % Levapren®700 HV
16: 15 % Levapren®800 HV
17: EVM 95 rein
18: 15 % Levapren®800 HV, 2-mal extrudiert

Neben der guten Reproduktion der Sauerstoffbarriereeigenschaften der erfindungsgemäßen Folien aus EVOH und Ethylen-Vinylacetat-Copolymeren zeigten die Zugdehnungsprüfungen dieser Folien wiederum ein deutlich verbesserte Ziehbarkeit, ohne im Festigkeitsniveau wesentlich zu verlieren. Auch dies ist überraschend, da die als Blendpartner verwendeten Ethylen-Vinylacetat-Copolymeren kaum als Elastomere des in der Literatur (EP-A1-0 722 850, EP-A1-0 761 477) angegebenen Typs anzusehen sind. Die dort angegebenen Elastomerklassen wie z.B. Butylkautschuk, SEBS und EPDM sind wenig polar und weisen Glastemperaturen deutlich unter 30°C.

Die in den erfindungsgemäßen Folien einzusetzenden EVM können durchaus Glastemperaturen von um Raumtemperatur und höher aufweisen, ohne dass die Flexibilierung und bessere Ziehbarkeit der Folien verloren geht.

Die hier verwendeten EVOH-EVM Folien wurden per DSC untersucht.

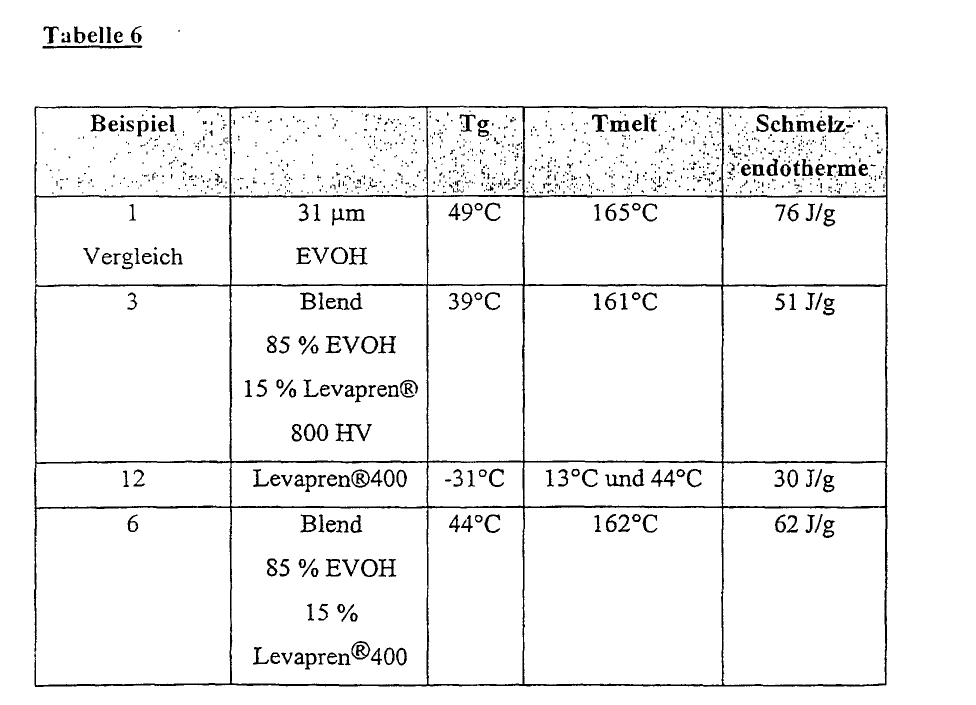

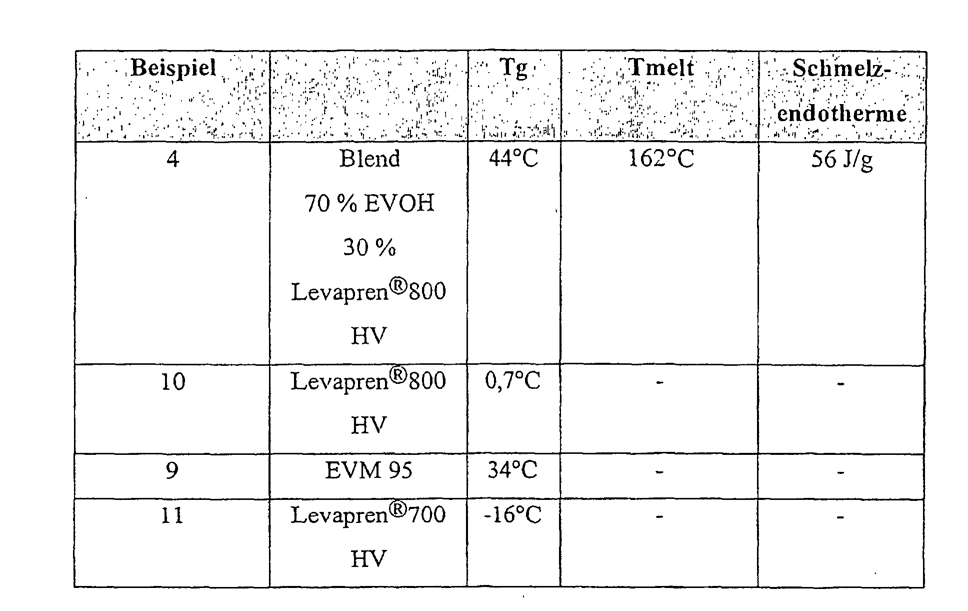

Einige der EVOH enthaltenden Folien zeigten eine schwache Endothermie bei 100°C welche auf die Freisetzung gebundenen Wassers zurückzuführen ist.

Es zeigte sich, dass im Falle der Verwendung von kristallinem EVM als Folienkomponente mit EVOH die EVA-Schmelzendotherme nur noch sehr schwach ausgeprägt war. Ebenso waren die Glasstufen der EVM Blendpartner kaum noch aufzufinden.

Dies deutet auf eine gewisse Verträglichkeit hin, ohne dass jedoch eine Mischbarkeit vorliegt. Offenbar werden die erfindungsgemäßen Ethylen-Vinylacetat-Copolymeren in dem EVOH fein verteilt, ohne dass wesentliche Eintrübungen beobachtet werden.

Weiterhin wird die Schmelzendotherme des EVOH durch den Zusatz von EVM kaum beeinflusst. Es ist offenbar vorteilhaft, dass das erfindungsgemäße EVM die Flexibilität im erwünschten Maße erhöht, gleichzeitig aber die EVOH Kristallinität nicht mindert, so dass weiterhin hohe Permeationsbarrieren erhalten bleiben.

### Versuchsbeispiele für Herstellung von mehrschichtigen Folien

Für die Versuche verwendete Materialien
- Eval® L101B:: Ethylen-Vinylalkohol-Copolymer mit einem Ethylengehalt von 27 mol-% und einem MFI-Wert von 3,9 nach ASTM 1238 (210°C, 2160 g) (der Fa. Kuraray).
- Eval® F101B:: Ethylen-Vinylalkohol-Copolymer mit einem Ethylengehalt von 32 mol-%. und einem MFI-Wert von 3,8 nach ASTM 1238 (210°C, 2160g) (der Fa. Kuraray).
- Eval® G156B:: Ethylen-Vinylalkohol-Copolymer mit einem Ethylengehalt von 47 mol-%. und einem MFI-Wert von 14,7 nach ASTM 1238 (210°C, 2160g) (der Fa. Kuraray).
- Soarnol® DT2903:: Ethylen-Vinylalkohol-Copolymer mit einem Ethylengehalt von 29 mol-%. und einem MFI-Wert von 3,2 nach ASTM 1238 (bei 210°C) (der Fa. Nippon Gohsei).
- Soarnol® AT4403:: Ethylen-Vinylalkohol-Copolymer der Fa. Nippon Gohsei mit einem Ethylengehalt von 44 mol-%. und einem MFI-Wert von 3 nach ASTM 1238 (bei 210°C).
- Soarnol® H4815:: Ethylen-Vinylalkohol-Copolymer mit einem Ethylengehalt von 48 mol-%. und einem MFI-Wert von 16 nach ASTM 1238 (bei 210°C) (der Fa. Nippon Gohsei)
- EVOH-30:: Ethylen-Vinylalkohol-Copolymer mit einem Ethylengehalt von 30 mol-%. und einem MFI-Wert von 10 nach ASTM 1238 (bei 210°C).
- Levamelt® 800:: Ethylen-Vinylacetat-Copolymer mit einem Vinylacetatgehalt von 80 Gew.-% und einem MFI-Wert von 4 bis 5 nach ASTM 1238.
- Vestamelt® 722:: Polyamidcopolymer mit einem MFI von 300 nach ASTM 1238 (160°C, 2,16 kg) und einem Schmelzpunkt von 107°C (der Fa. Degussa).
- Vestamelt® 471:: Polyamidcopolymer mit einem MFI von 20 nach ASTM 1238 (160°C, 2,16 kg) und einem Schmelzpunkt von 119°C (der Fa. Degussa)
- Durethan® CI31F:: Polyamidcopolymer mit einem Schmelzpunkt von 187-191°C (der Fa. Bayer AG)
- Durethan® B38FKA:: Polyamid mit einem Schmelzpunkt von 222°C (der Fa. Bayer AG)

### Versuchsserie A

### Herstellung von Blends für die Barriereschicht

- Versuchsapparatur:: Zweischneckenkneter (ZSK) vom Typ ZSK 53 Drehzahl 165 U/min; die Massetemperatur wird mittels der Temperaturen in den Extrusionszonen eingestellt (200 bis 215°C)

Strangextrusion, 2mm Durchmesser, Kühlung in einem Wasserbad bei Raumtemperatur, Abschlag mit einem Messer zu Granulat.
Unter C2 wird in der Tabelle 7 Ethylen verstanden.

**Tabelle 7**

| | | | | | | | |
|---|---|---|---|---|---|---|---|
| Blends mit ZSK-Maschine, Durchsatz 50 kg/h, Verweilzeit ca. 35 s, Düsentemperatur 200°C, 14 bar | | | | | | | |
| Massetemperatur 215°C bei den F und G-Typen, 240°C bei dem L-Typ, Angaben in Gewichtsteilen | | | | | | | |

| **Blend- Nr** | **EVOH** | **Anteil** | **EVM** | **Anteil** | **Kompat.** | **Anteil** | **Granulat** |
|---|---|---|---|---|---|---|---|
| 1 | G156B 47 mol-% C2 | 85 | L800 | 15 | | | Hart |
| 2 | F101B 32 mol-% C2 | 85 | L800 | 15 | | | Hart |
| 4 | L101B 27 mol-% C2 | 85 | L800 | 15 | | | Hart |
| 5/1 | DT2903 29 mol-% C2 | 80 | L800 | 15 | V471 | 5 | Hart |
| 5/2 | DT2903 29 mol-% C2 | 80 | L800 | 15 | V722 | 5 | Hart |
| 5/3 | DT2903 29 mol-% C2 | 80 | L800 | 15 | CI31F | 5 | Hart |
| 6 | L101B 27 mol-% C2 | 70 | L800 | 30 | | | Etwas weich |
| 7 | L101B-27 mol-% C2 | 60 | L800 | 40 | | | Weich |
| 8 | L101B 27 mol-% C2 | 40 | L800 | 60 | | | Cold flow, klebt |
| 12 | AT4403 44 mol-% C2 | 85 | L450 | 15 5 | | | Hart |
| 13 | EVOH-30 30 mol-% C2 | 85 | L800 | 15 5 | | | Hart |

Es wurde leicht opakes bis weißes Granulat erhalten.

Bei den Blends 5/1 bis 5/3 der Tabelle 7 wurden Copolyamide hinzugesetzt, um zu prüfen, ob diese im Sinne von Kompatibilisatoren wirken können. Die Blendmaterialien wurden problemlos zu Strängen extrudiert und konnten nach Durchgang durch ein Wasserbad zu Granulat zerhackt werden. Blend 8 der Tabelle 7 wies in der Wärme eine Oberflächenklebrigkeit auf und zeigte bei Lagerung cold flow. Es wurden Blends mit einem mehrheitlichen Anteil von Ethylen-Vinylacetat-Copolymer für die weitere Verarbeitung im Sinne einer Dosierung als Granulat gekühlt oder aber es erfolgt eine on-line-Dosierung in entsprechende Folienextrudern.

### Versuchsserie B: Herstellung dreilagiger Folien durch Coextrusion

Es wurden Extrusionen von dreilagigen Folien der Schichtfolge Polyamid-B-Schicht-Polyamid durchgeführt, wobei die B-Schicht die Barriereschicht darstellt. Für B wurden EVOH-Handelsprodukte (Vergleichsbeispiele) sowie die erfindungsgemäßen Blends aus Versuchsserie A eingesetzt. Das Polyamid (PA) ist Durethan® B38FKA, ein Polyamid6 Folienmaterial der Bayer AG.

Es wurden jeweils Folien der nominellen Dicke 135 µm für die anschließende biaxiale Reckung und Folien von 48 µm Dicke hergestellt, die für den Tiefziehprozess bestimmt waren.

### Daten zum Versuchsaufbau:

4 Extruder, die auf einen 3-Schichtfeedblock geführt werden,
Feedblock 270°C, Düse 280°C an 3 verschiedenen Messpunkten.

Die Schichtdicken wurden durch eine radiometrische Dickenmessung on-line bestimmt, wobei die Kalibierung mittels einer Off-line-Messung (Mikrometer) erfolgt. Die Dicken wurden hauptsächlich durch die Extruderdrehzahlen und die Abzugsgeschwindigkeit variiert. Die Dicke der einzelnen Schichten wurde durch gezieltes Ab- und Hinzuschalten der jeweiligen Schicht beeinflusst. Die Dicke dieser Schicht wurde durch die Differenz der Dicke vor und der Dicke nach dem Ab- oder Hinzuschlagen der Schicht bestimmt.

Die On-line-Dickenmessung diente auch der Überwachung der Gleichmäßigkeit der Schichtdicken. Die Breitschlitzdüse wurde zu Beginn auf eine größtmögliche Gleichmäßigkeit gestellt.

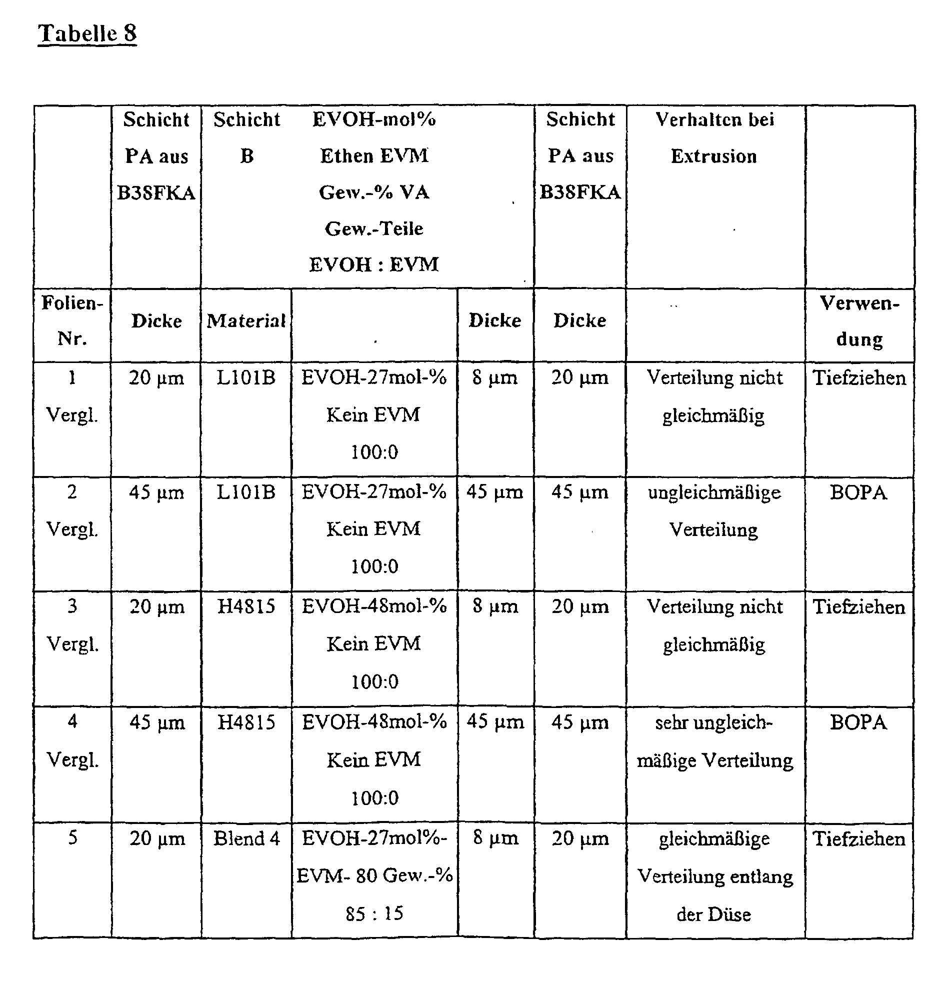

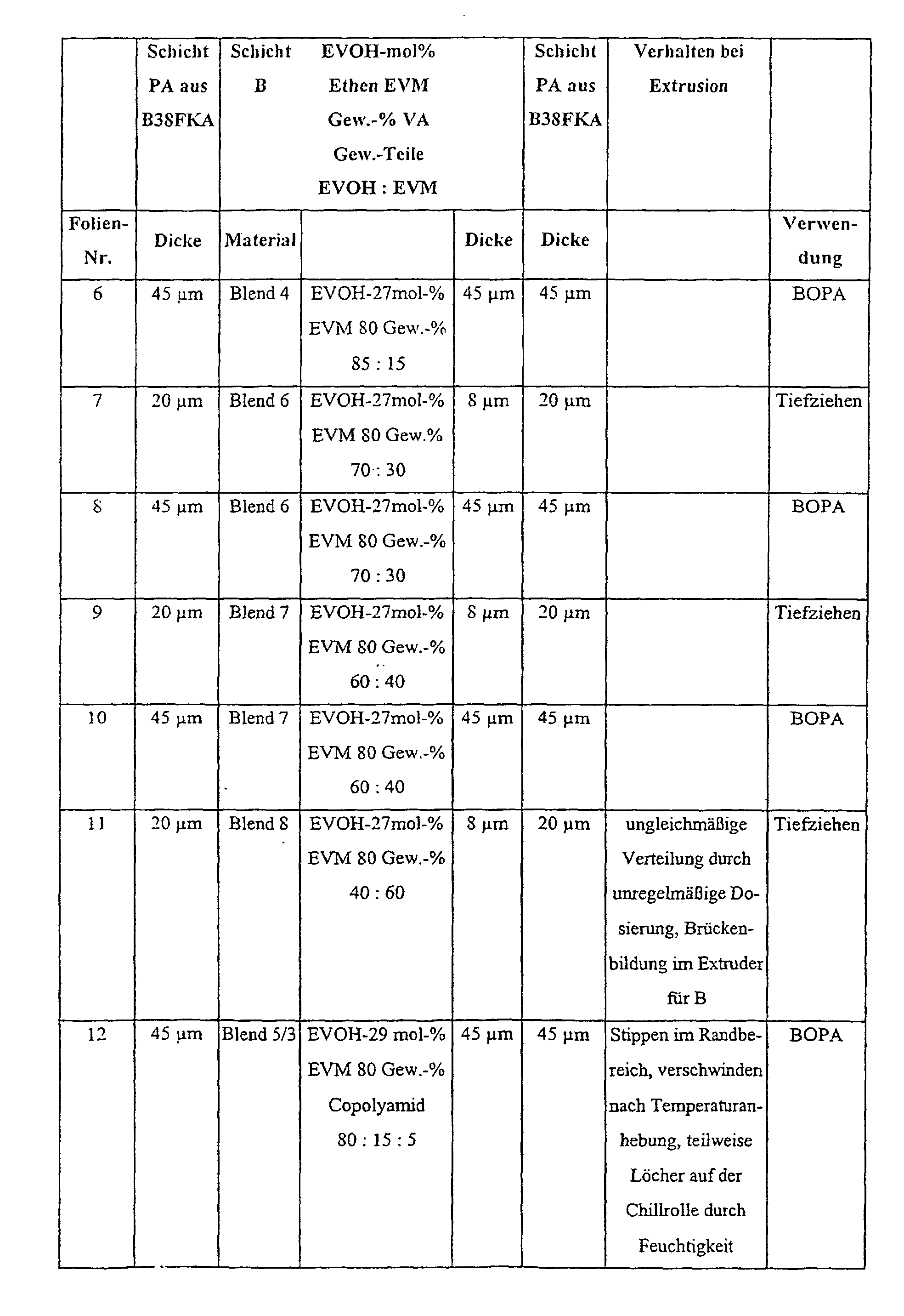

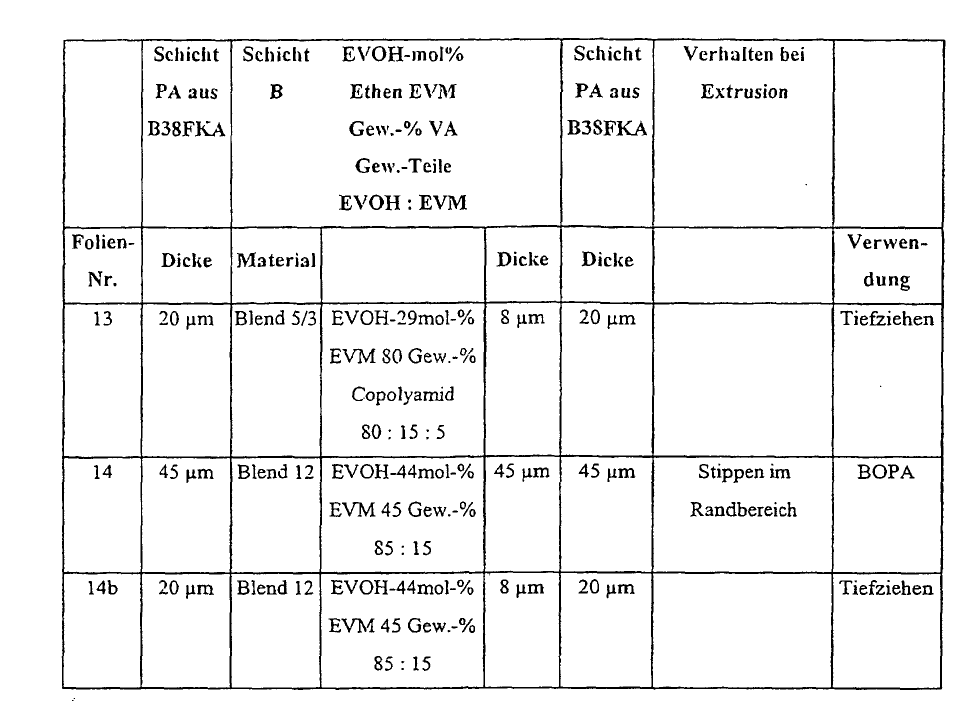

Die Folien wurden mit einer Gießwalzentemperatur von 80 bis 100°C hergestellt, über die On-line Dickenmessung geführt und, nach dem Randbeschnitt, aufgewickelt.

### Viskositäten des eingesetzten EVOH's bzw. der Blends aus Versuchsreihe A

Die Scherrate bei Extrusionen von Folien oder dünnen Formkörpern durch Düsen liegt im Bereich 1 bis 100 s⁻¹. Für eine gute Extrusion werden Materialien mit niedriger Viskositäten bevorzugt. Es werden daher gemäß Tabelle 9 die Viskositäten von Blends mit unterschiedlichen EVM-Gehalten bei optimalen Extrusionsscherraten gemessen.

Wie Tabelle 9, zeigt kommt es zu einer Viskositätserniedrigung je höher der prozentuale Gehalt an EVM im Blend ist gegenüber reinem EVOH.

**Tabelle 9**

| **Blend Nr.** | **%-Anteil Levamelt® 800 in Blend mit L101B** | **Viskosität η* bei 300 s**^{**-1**} **in Pa.s** |
|---|---|---|
| - | 0 | 800 |
| 4 | 15 | 620 |
| 6 | 30 | 420 |
| 7 | 40 | 400 |
| 8 | 60 | 290 |
| - | 100 | 150 |

Viskosität η* in Pa.s wird gegen die Scherrate (dargestellt als Winkelgeschwindigkeit omega in 1/s) gemessen.

Die Proben wurden zunächst länger als 16 Stunden bei 80°C im Vakuumschrank getrocknet und anschließend mit der Laborpresse bei 200°C zu Probenkörpern verpresst. Die Messungen wurden im ARES-Oszillationsrheometer der Fa. Rheometric mit der Platte-Platte Geometrie PP25 im Frequenzbereich von 10 bis 0,1 Hz und bei Temperaturen von 180°C bis 260°C durchgeführt.

### Versuchsserie C

Reckversuche zur Fertigung von biaxial orientierten Polyamid (BOPA)-Mehrschichtfolien.
Reckungen bi-axial simultan.

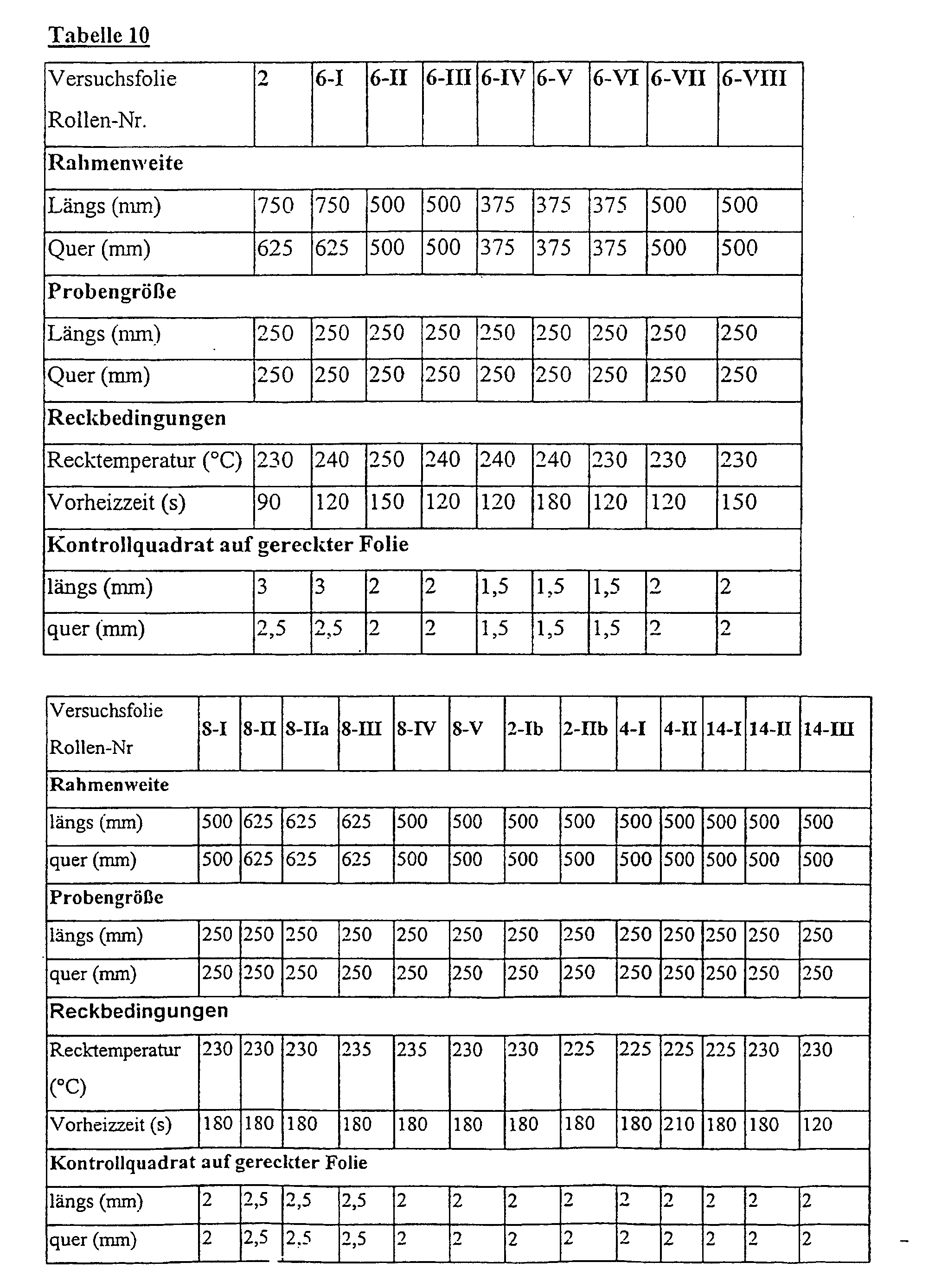

**Tabelle 11**

| **BOPA- Nr.** | **Barriereschicht EVOH mol-% Ethen EWM Gew.-% VA Gew.-Teile EVOH : EVM** | **Optik vorher** | **Optik nach Reckg.** | **Bemerkung** |
|---|---|---|---|---|
| 2 | EVOH27mol-% Kein EVM Vergleich | transp. | | Folie gerissen mit den Startbedingungen, keine Reckung erzielt. Temperatur auf 240°C erhöht, Aufheizzeit auf 120 s verlängert |
| 6-I | EVOH48mol-% Kein EVM Vergleich | Opak | transp. | Folie gerissen, Temperatur auf 250°C erhöht und Aufheizzeit auf 150 s verlängert |
| 6-II | Wie bei 6-I | Opak | transp. | Gelbfärbung der Folie |
| 6-III | Wie bei 6-I | Opak | transp. | Folienaufriss |
| 6-IV | Wie bei 6-1 | Opak | transp. | Folie intakt reckbar jedoch teilweise trüb, Aussehen etwas inhomogen |
| 6-V | Wie bei 6-I | Opak | transp. | Folie intakt reckbar, es wurden Löcher gefunden, teilweise trüb, Aussehen etwas inhomogen, Folie weist Spuren von Abdrücken auf, daher die weiteren Folien mit Aceton gereinigt |
| 6-VI | Wie bei 6-I | Opak | transp. | Folie intakt reckbar. Es sind ungereckte Flächen erkennbar, daher kann das Reckverhältnis noch erhöht werden |
| 6-VII | Wie bei 4 | Opak | transp. | Reproduktion, weitere Reckung möglich |
| 6-VIII | Wie bei 4 | Opak | transp. | Weiter gereckt, dennoch nicht vollständig ausgereckt |

| **BOPA- Nr.** | **Barriereschicht EVOH mol-% Ethen EVM Gew.-% VA Gew.-Teile EVOH : EVM** | **Optik vorher** | **Optik nach Reckg.** | **Bemerkung** |
|---|---|---|---|---|
| 8-I | EVOH27mol-% EVM 80Gew.% 85 : 15 | Opak | transp. | Noch nicht vollständig ausgereckt |
| 8-II | Wie bei 8-I | Opak | transp. | Aufriss |
| 8-IIa | Wie bei 8-I | Opak | transp. | Aufriss, Temperatur nicht hoch genug |
| 8-III | Wie bei 8-I | Opak | transp. | Folienabriss, Reckverhältnis muss etwas abgesenkt werden |
| 8-IV | Wie bei 8-I | Opak | transp. | Folienabriss, evt. zu hohe Temperatur |
| 8-V | Wie bei 8-I | Opak | transp. | Folieneinriss |
| 2-Ib | EVOH27mol-% Kein EVM Vergleich | transp. | trüb, | Folieneinriss, Phasentrennung |
| 2-IIb | EVOH27mol-% Kein EVM Vergleich | transp. | trüb | Folie intakt, Schichtstrukturen, "Türkensäbel" |
| 4-II | EVOH48mol-% Kein EVM Vergleich | transp. | trüb | Keine Einrisse, aber Phasentrennung |
| 4-II | EVOH48mol-% Kein EVM Vergleich | transp. | trüb | Keine Einrisse, Folie wird trüb, sehr schlierig, Phasentrennung |
| 14-I | EVOH44mol-% EVM45 Gew.% 85 : 15 | Opak | | Keine Einrisse, Folie etwas schlierig |
| 14-II | EVOH44mol-% EVM 45Gew.% 85 : 15 | Opak | | Teilweise eingerissen, etwas Fließstrukturen |
| 14-III | wie bei 14-III | Opak | | Teilweise eingerissen, etwas Fließstrukturen |

### Sauerstoffdurchlässigkeiten

Diese Sauerstoffdurchlässigkeiten wurden mittels OX-TRAN-Gerät der Fa. Mocon mit elektrochemischem O₂-Detektor bestimmt.

| | | |
|---|---|---|
| Messparameter | Druck | 1000 mbar O₂ |
| | Gasfeuchte | trocken |
| | Temperatur | 23 Grad Celsius |

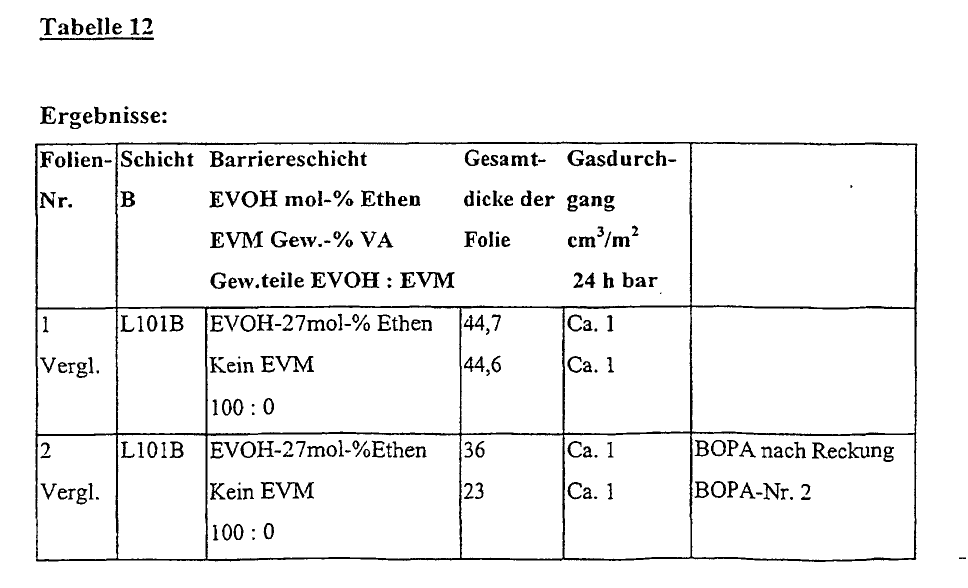

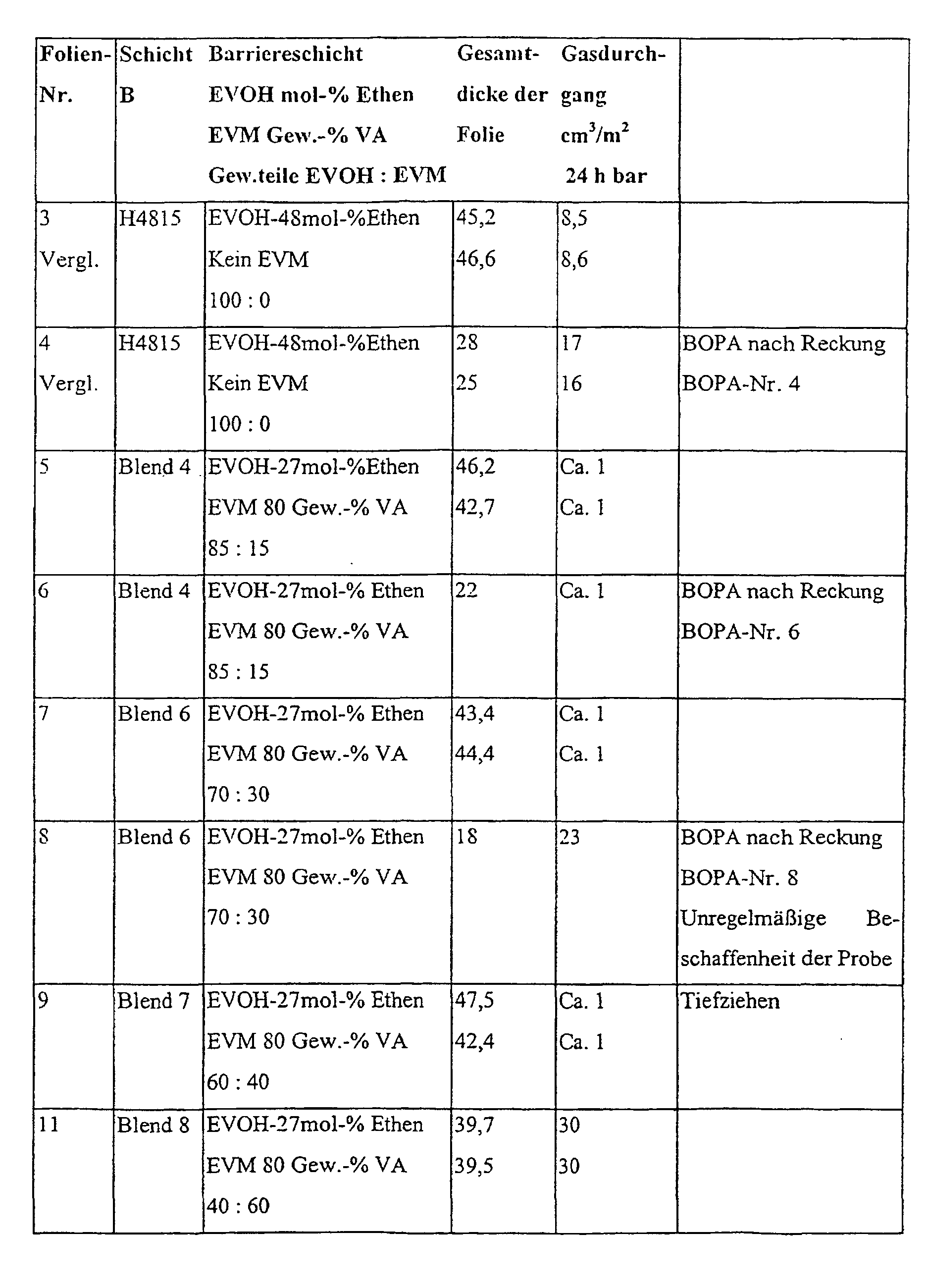

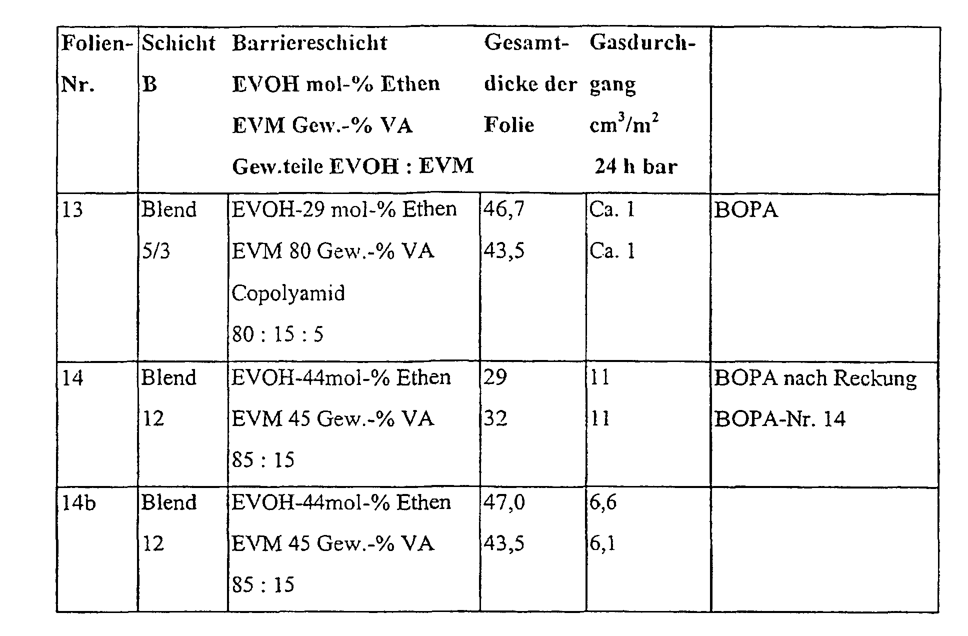

Da während der Messzeit eine genaue Bestimmung der Sauerstoffdurchlässigkeit wegen der hohen Sauerstoffbarriere nicht eindeutig bestimmt werden konnte, wurden bei den entsprechenden Proben die Angabe ca. 1 angegeben. Die tatsächlichen Werte liegen jedoch darunter.

### Tiefziehbarkeit

Die Tiefziehbarkeit der Folien wurde qualitativ durch eine Apparatur bestimmt, bei der ein Folienstück von ca. 10x10 cm in einen Rahmen gespannt wurde, mittels einer IR-Lampe aufgewärmt und dann durch Vakuum in eine Form gezogen wurde, die aus einer runden Stufenpyramide (4 x 1,5 cm hohe Stufen) bestand. Dabei wurden unterschiedliche Dehnungen realisiert.

Es wurde gefunden, dass sich die erfindungsgemäßen Folien zu transparenten, dünnen Schichten tiefziehen ließen, während die Vergleichsfolien bei hohen Dehnungen zur Bildung von optischen Inhomogenitäten (Phasentrennungen) neigten.
Folie 4: Bildung weißer Streifen, trübe Bezirke in Dehnungsrichtung
Folie 6: ursprünglich trübe Folie wird in den tiefgezogenen Bereichen transparent
Folien 6, 8 und 14 verhielten sich ähnlich wie Folie 6

### Morphologie der erhaltenen Folien

Untersuchung per TEM (Transmission Electron Microscopy) nach Kontrastierung mit RuO₄.
Dabei wurden folgende Folie verwendet und jeweils die Morphologie der inneren Barrieschicht untersucht mit Vergrößerungen von 3500 und 10000.
Folie 4 (Vergleich): keine Strukturierung erkennbar

### Barriereschichten mit EVOH und EVM (80 Gew.-% Vinylacetat)

| | |
|---|---|
| Folie 5 | langgestreckte Partikel (EVM, Anteil 15 Gew.-%) von ca. 0,5 x 5 µm und kleiner |
| Folie 7 | langgestreckte Partikel bzw. Lamellen von ca. 1 µm (EVM-Anteil 30 Gew.-%) |
| Folien 8 nach Reckung | ovale Partikel zum Teil mit Einschlüssen von EVOH bis ca. 2 µm (EVM-Anteil 30 Gew.-%) |
| Folie 9 | langgestreckte Lamellen bis 2 µm Dicke und kleine Partikel mit einem Durchmesser von 0,4 bis 1 µm (EVM-Anteil 40 Gew.-%) |
| Folie 11 | EVM bildet die kontinuierliche Phase mit EVOH-Partikeln der Größe 2 µm (EVM-Anteil 60 Gew.-%) |

### Barriereschichten mit EVOH und EVM (80 Gew.-% Vinylacetat) und Copolyamid (Copa)

| | |
|---|---|
| Folie 13 | kugelförmige Partikel der Größe 0,4 bis 1 µm (EVM-Anteil 15 Gew.%, 5 Gew.-% Copa) |

### Barriereschichten mit EVOH und EVM (45 Gew.-% Vinylacetat)

| | |
|---|---|
| Folie 14 | kugelförmige Partikel der Größe 0,2 bis 0,8 µm, relativ eng verteilt |

### Beurteilung der Folien aus Versuchsreihe B

Die Folien 1 bis 4 (Vergleich) waren transparent und konnten visuell wie Folien ähnlicher Dicke aus reinem Polyamid beurteilt werden.

Die Folien 5 bis 14b sind opak bis leicht trübe, wobei die dicken Folien (bestimmt für die Reckung) deutlich weniger transparent waren als die dünneren Varianten.

Größere Anteile an Blendpartner in der Barriereschicht führten zu einer stärkeren Eintrübung.

Alle Folien waren makroskopisch homogen.
Folie 8 wurde wegen Unregelmäßigkeiten in der Granulat-Dosierung (Klebrigkeit des Granulats) nur mit unregelmäßigen Dicken der Barriereschicht erhalten.

Folie 12 wies Löcher auf, die auf Feuchtigkeit in dem Blendmaterial zurückgeführt werden konnten.

Folien 14 wies Stippen im Randbereich auf Durch Variation der Temperatur konnten diese beseitigt werden.

Gegenüber den Folien des Vergleichs kann mit den erfindungsgemäßen Blends eine deutlich bessere Extrusion verzeichnet werden. Der Zusatz von Ethylen-Vinylacetat-Copolymer wirkt günstig auf das Viskositätsverhalten bei der Castfolienherstellung.

### Beurteilung der Viskosität der eingesetzten EVOH bzw. der erfindungsgemäßen Blends

Gegenüber den reinen EVOH wies das Ethylen-Vinylacetat-Copolymer Levamelt® 800 eine viel stärkere Viskositätserniedrigung durch Scherung auf (shear thinning). Die Zumischung von Levamelt in das EVOH (Blends 3, 6, 7 und 8) führte zu einem deutlichen shear thinning in der Mischung, obwohl das Levamelt nur als separate Phase dispergiert in der EVOH-Matrix vorlag. Daraus ergab sich ein erleichtertes Extrusionsverhalten der erfindungsgemäßen Blends gegenüber reinem EVOH besonders unter den Bedingungen der Folienextrusion, wo das Material gleichmäßig durch sehr dünne Spalte treten musste.

### Beurteilung der Reckung der Versuchsreihe C

Eine genauere Inspektion der Folien zeigte, dass alle Vergleichsfolien vor der Reckung transparent waren, nach der Reckung jedoch ein unregelmäßiges Strukturbild aufwiesen. Dabei waren die ausgereckten Flächen der Vergleichsfolien entweder trübe oder wiesen Risse auf durch Trennung der Lagen.

Die Folien mit der erfindungsgemäßen Barriereschicht wurden durch die Reckung transparent. Für alle Reckversuche galt, dass die Einstellung der optimalen Reckbedingungen längere Versuche erforderte und stark von der Temperatur abhing. Die Reckgeschwindigkeit wurde hier noch nicht variiert. Die erfindungsgemäßen Folien mit den Barriereblends waren tendenziell noch nicht ausgereckt, so dass eine weitere Optimierung zu größeren Reckverhältnissen noch möglich sein wird.

Die Vergleichsfolien verschlechterten sich optisch nach Reckung, dies konnte auf eine Phasenseparation zurückgeführt werden, die bei den erfindungsgemäßen Folien nicht beobachtet wird. Das Kriterium der Kontakttransparenz wurde immer erfüllt.

### Beurteilung der Sauerstoffdurchlässigkeit

Es konnte festgestellt werden, dass die gereckten Folien im Vergleich zu den Folien gleicher Zusammensetzung eine Sauerstoffdurchlässigkeit besaßen, die sich aus den Dicken errechnen ließ.

Die erfindungsgemäßen Folien wiesen im Vergleich zu den Folien mit den reinen EVOH-Barriereschichten unveränderte, exzellente Barrierewerte. Erst bei einer Zumischung von Ethylen-Vinylacetat-Copolymer von 60 Gew.-% steigen die Sauerstoffdurchlässigkeiten an. Daher sollte der Anteil an Ethylen-Vinylacetat-Copolymer in der Barriereschicht 50 Gew.-% nicht wesentlich überschreiten.

Es ließ sich folgern, dass bei den Blends aus EVOH und EVM mit Anteilen bis mindestens 40 Gew.-% EVM dieses in Form einer nichtkontinuierlichen Phase vorlag. Das EVM formte in einer Matrix aus EVOH Partikel, die eine langgestreckte Form aufwiesen. Die Erhöhung des Anteils an EVM führte zu teilweise lamellaren Strukturen, was für den Erhalt von Barriereeigenschaften vorteilhaft ist. Nach Reckung, welche aus einem Temperschritt bestand, veränderte sich die Form der EVM-Partikel, indem sich die lamellaren Teilchen zu eher kugelförmigen Partikeln werden. Für das erfindungsgemäße mehrschichtige Erzeugnis zeigt die Ausbildung der diskreten EVM-Phase in der EVOH-Phase gute Voraussetzungen für die Reckung/Tiefziehung der Barriereschicht. Die Matrix aus EVOH bestimmt dabei die Barriereeigenschaften.

Überschritt der Anteil EVM den des EVOH deutlich wie in Folie 11, tritt eine Phasenumkehr ein. Es war anzunehmen, dass Schichten dieser Art nicht mehr über die für EVOH typischen Barriereeigenschaften verfügten.

In Folie 13 konnte der Effekt des Zusatzes eines Copolyamids als Vermittler beobachtet werden. Es wurden Partikel kugelförmiger Gestalt erhalten. Es ist anzunehmen, dass diese Phasenmorphologie auch über Reck- und Temperprozesse stabil bleibt.

Schließlich wurde in Folie 14 der Effekt des Einsatzes eines weniger polaren EVM beobachtet. Hier ist das EVM besonders fein verteilt.

Der Zusatz von Copolyamiden als dritte Komponente in der Barriereschicht konnte besonders zur Stabilisierung der Verteilung des EVM dienen. Dadurch konnte bei einer mehrfachen Verarbeitung (Verwendung von Recyclat) und bei Temperungen die Stabilität der Morphologie abgesichert werden. Dadurch blieb die Dispersion des EVM in der EVOH-Matrix feinteilig und damit die Transparenz gesichert.

Die bessere Reckbarkeit der Folien mit den erfindungsgemäßen Barriereschichten ist besonders ausgeprägt bei Verwendung des EVM-Typs mit 80 Gew.-% Vinylacetat und weniger ausgeprägt bei Verwendung des EVM-Typs mit 45 Gew.-% Vinylacetat. Dies kann mit der stark gedehnten Struktur der EVM-Phase zusammenhängen, welche eine besonders ausgeprägte Flexibilisierung bewirkt.

Für den Fachmann ergab sich daher eine Optimierbarkeit der Eigenschaften mit Blick auf die Flexibilisierung, insbesondere die Reckbarkeit im Verbund mit PA und andererseits die Einstellung geringer Teilchengrößen der EVM-Phase. Dadurch konnte die Transparenz und Stabilität der Morphologie gesteuert werden. Die Auswahl des EVM und der Zusatz von Copolyamiden sind hier als bedeutungsvoll anzusprechen.

## Patentansprüche

1. Ein- oder mehrschichtiges Erzeugnis nach Anspruch 1, wobei das Erzeugnis eine Folie ist, enthaltend α-Olefin-Vinylalkohol-Copolymere und wenigstens ein α-Olefin-Vinylacetat-Copolymerisat, **dadurch gekennzeichnet, dass** das α-Olefin-Vinylacetat-Copolymerisat im Bereich von 35 bis 99,99 Gew.% an Vinylacetat-Wiederholungseinheiten enthält und dass das α-Olefin ausgewählt wird aus Ethylen, Propen, n-Buten, 1-Buten, Penten, Hexen, 1-Hexen, Hepten, Octen, 1-Octen und deren Gemischen.

2. Folien gemäss Anspruch 1, **dadurch gekennzeichnet, dass** das α-Olefin-Vinylacetat-Copolymerisat mindestens 45 Gew.% an Vinylacetat-Wiederholungseinheiten enthält.

3. Folien gemäss Anspruch 2, **dadurch gekennzeichnet, dass** das α-Olefin-Vinylacetat-Copolymerisat mindestens 65 Gew.% an Vinylacetat-Wiederholungseinheiten enthält.

4. Verfahren zur Herstellung des einschichten Erzeugnisses gemäss einem der Ansprüche 1-3, **dadurch gekennzeichnet, dass** das Copolymerisat in einem Mischorgan mit den übrigen Bestandteilen vermischt wird.

5. Ein mehrschichtiges Erzeugnis , enthaltend mindestens eine Schicht A und mindestens eine Schicht B,
wobei
A ein thermoplastisches Polymer enthält und
B ein α-Olefin-Vinylalkohol-Copolymer und ein α-Olefin-Vinylacetat-Copolymer mit einem Vinylacetatgehalt im Bereich von 35 bis 95 Gew.-% enthält und wobei das α-Olefin-Vinylalkohol-Copolymer ein Ethylen-Vinylalkohol-Copolymerisat mit einem Ethylengehalt im Bereich von 20 bis 75 Mol-% ist.

6. Ein mehrschichtiges Erzeugnis nach Anspruch 5, wobei das thermoplastische Polymer Polyamid oder Polypropylen ist.

7. Das mehrschichtige Erzeugnis nach einem der Ansprüche 5 und 6, wobei das α-Olefin-Vinylacetat-Copolymer Ethylen-Vinylacetat-Copolymer ist.

8. Das mehrschichtige Erzeugnis nach einem der Ansprüche 5 bis 7, wobei die Schichtabfolge A,B,A ist.

9. Das mehrschichtige Erzeugnis nach Anspruch 8, wobei die Schichtabfolge Polyamid B-Schicht Polyamid ist.

10. Das mehrschichtige Erzeugnis nach Anspruch 8, wobei die Schichtabfolge Polypropylen B-Schicht Polypropylen ist.

11. Das mehrschichtige Erzeugnis nach einem der Ansprüche 5 bis 10, wobei die Schicht B zusätzlich bis zu 25 Gew.-% eines Copolyamids mit einem Schmelzpunkt im Bereich von 70 bis 200°C enthält.

12. Das mehrschichtige Erzeugnis nach Anspruch 8, wobei die Schichtabfolge Polypropylen B-Schicht Polypropylen ist und zwischen den Schichten jeweils noch eine weitere Schicht eines Polymers eingefügt ist, die der Verbesserung des Zusammenhaltes des Verbundes dient.

13. Verfahren zur Herstellung des mehrschichtigen Erzeugnisses nach einem der Ansprüche 5 bis 11 durch Coextrusion oder durch Laminierung.

14. Verpackungsmaterial enthaltend das ein- oder mehrschichtige Erzeugnis nach einem der Ansprüche 1 bis 12.

## Claims

1. Single- or multilayer product according to Claim 1, where the product is a film, comprising α-olefin-vinyl alcohol copolymers and at least one α-olefin-vinyl acetate copolymer, **characterized in that** the amount of vinyl acetate repeat units present in the α-olefin vinyl acetate copolymer is in the range from 35 to 99.99% by weight and **in that** the α-olefin is selected from ethylene, propene, n-butene, i-butene, pentene, hexene, 1-hexene, heptene, octene, 1-octene and mixtures of these.

2. Films according to Claim 1, **characterized in that** the α-olefin-vinyl acetate copolymer contains at least 45% by weight of vinyl acetate repeat units.

3. Films according to Claim 2, **characterized in that** the α-olefin-vinyl acetate copolymer contains at least 65% by weight of vinyl acetate repeat units.

4. Process for producing the single-layer product according to any of Claims 1-3, **characterized in that** the copolymer is mixed in a mixer with the other constituents.

5. Multilayer product, comprising at least one layer A and at least one layer B,
where
A comprises a thermoplastic polymer and
B comprises an α-olefin-vinyl alcohol copolymer and an α-olefin-vinyl acetate copolymer whose vinyl acetate content is in the range from 35 to 95% by weight and where the α-olefin-vinyl alcohol copolymer is an ethylene-vinyl alcohol copolymer whose ethylene content is an the range from 20 to 75 mol%..

6. Multilayer product according to Claim 5, where the thermoplastic polymer is polyamide or polypropylene.

7. Multilayer product according to either of Claims 5 and 6, where the α-olefin-vinyl acetate copolymer is ethylene-vinyl acetate copolymer.

8. Multilayer product according to any of Claims 5 to 7, where the layer sequence is A,B,A.

9. Multilayer product according to Claim 8, where the layer sequence is polyamide layer B polyamide.

10. Multilayer product according to Claim 8, where the layer sequence is polypropylene layer B polypropylene.

11. Multilayer product according to any of Claims 5 to 10, where the layer B additionally comprises up to 25% by weight of a copolyamide with a melting point in the range from 70 to 200°C.

12. Multilayer product according to Claim 8, where the layer sequence is polypropylene layer B polypropylene and between each pair of layers another layer of a polymer has been introduced and serves to improve the cohesion of the composite.

13. Process for producing the multilayer product according to any of Claims 5 to I 1 by coextrusion or by lamination.

14. Packaging material comprising the single- or multilayer product according to any of Claims I to 12.

## Revendications

1. Produit à une ou plusieurs couches selon la revendication 1, ce produit consistant en une feuille contenant des copolymères α-oléfine-alcool vinylique et au moins un copolymère α-oléfine-acétate de vinyle et **se caractérisant en ce que** le copolymère α-oléfine-acétate de vinyle contient de 35 à 99,99 % en poids de motifs répétés d'acétate de vinyle et **en ce que** l'α-oléfine est choisie dans le groupe consistant en l'éthylène, le propylène, le n-butène, l'isobutène, le pentène, l'hexène, le 1-hexène, l'heptène, l'octène, le 1-octène et leurs mélanges.

2. Feuilles selon la revendication 1, **caractérisées en ce que** le copolymère α-oléfine-acétate de vinyle contient au moins 45 % en poids de motifs répétés d'acétate de vinyle.

3. Feuilles selon la revendication 2, **caractérisées en ce que** le copolymère α-oléfine-acétate de vinyle contient au moins 65 % en poids de motifs répétés d'acétate de vinyle.

4. Procédé pour la préparation d'un produit à une seule couche selon l'une des revendications 1 à 3, **caractérisé en ce qu'**on mélange le copolymère avec les autres constituants dans un appareil de mélange.

5. Un produit à couches multiples contenant au moins une couche A et au moins une couche B
la couche A contenant un polymère thermoplastique et
la couche B contenant un copolymère α-oléfine-alcool vinylique et un copolymère α-oléfine-acétate de vinyle à une teneur en acétate de vinyle de 35 à 95 % en poids, le copolymère α-oléfine-alcool vinylique consistant en un copolymère éthylène-alcool vinylique à une teneur en éthylène de 20 à 75 mol %.

6. Un produit à couches multiples selon la revendication 5, dans lequel le polymère thermoplastique est un polyamide ou un polypropylène.

7. Le produit à couches multiples selon l'une des revendications 5 et 6, dans lequel le copolymère α-oléfine-acétate de vinyle est un copolymère éthylène-acétate de vinyle.

8. Le produit à couches multiples selon l'une des revendications 5 à 7, pour lequel la séquence des couches est A, B, A.

9. Le produit à couches multiples selon la revendication 8, pour lequel la séquence de couches est polyamide-couche B-polyamide.

10. Le produit à couches multiples selon la revendication 8, pour lequel la séquence des couches est polypropylène-couche B-polypropylène.

11. Le produit à couches multiples selon l'une des revendications 5 à 10, pour lequel la couche B contient en outre jusqu'à 25 % en poids d'un copolyamide dont le point de fusion se situe dans l'intervalle de 70 à 200°C.

12. Le produit à couches multiples selon la revendication 8, pour lequel la séquence de couches est polypropylène-couche B-polypropylène et dans lequel, entre chacune des couches, il y a encore une autre couche d'un polymère qui contribue à améliorer la cohérence du produit composite.

13. Procédé pour la préparation d'un produit à couches multiples selon l'une des revendications 5 à 11 par co-extrusion ou laminage.

14. Matière d'emballage contenant le produit à une ou plusieurs couches selon l'une des revendications 1 à 12.
